(19) **Europäisches Patentamt / European Patent Office / Office européen des brevets**

(11) **EP 4 610 323 A1**

(12) **EUROPEAN PATENT APPLICATION**
published in accordance with Art. 153(4) EPC

(43) Date of publication:
03.09.2025 Bulletin 2025/36

(21) Application number: 23882378.5

(22) Date of filing: 05.10.2023

(51) International Patent Classification (IPC):
$C09K\ 5/04^{(2006.01)}$    $C10M\ 101/02^{(2006.01)}$
$C10M\ 105/04^{(2006.01)}$    $C10M\ 105/38^{(2006.01)}$
$C10M\ 107/24^{(2006.01)}$    $C10M\ 107/34^{(2006.01)}$
$C10M\ 107/38^{(2006.01)}$    $F25B\ 1/00^{(2006.01)}$
$C10N\ 40/30^{(2006.01)}$

(52) Cooperative Patent Classification (CPC):
C09K 5/04; C10M 101/02; C10M 105/04;
C10M 105/38; C10M 107/24; C10M 107/34;
C10M 107/38; F25B 1/00

(86) International application number:
PCT/JP2023/036437

(87) International publication number:
WO 2024/090169 (02.05.2024 Gazette 2024/18)

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: 26.10.2022 JP 2022171785

(71) Applicant: **AGC INC.**
**Chiyoda-ku,**
**Tokyo 1008405 (JP)**

(72) Inventor: **HAYAMIZU, Hiroki**
**Tokyo 100-8405 (JP)**

(74) Representative: **Müller-Boré & Partner**
**Patentanwälte PartG mbB**
**Friedenheimer Brücke 21**
**80639 München (DE)**

(54) **WORKING MEDIUM FOR HEAT CYCLE, METHOD FOR STORING WORKING MEDIUM FOR HEAT CYCLE, METHOD FOR MANUFACTURING WORKING MEDIUM FOR HEAT CYCLE, COMPOSITION FOR HEAT CYCLE SYSTEM, AND STORAGE CONTAINER FOR WORKING MEDIUM FOR HEAT CYCLE**

(57) A working medium for a heat cycle includes trifluoroethylene, a low boiling point compound having a lower boiling point than the boiling point of the trifluoroethylene, and high boiling point compounds having higher boiling points than the boiling point of the trifluoroethylene. In the working medium, the low boiling point compound is at least one selected from the group consisting of carbon dioxide, R116, and R41, and the high boiling point compounds are at least two selected from the group consisting of HFC-32, HFO-1234yf, HFO-1234ze (E), HFO-1243zf, PFC-14, HFC-134, HFC-143a, HFC-227ea, cyclopropane, isobutene, isobutane, dimethyl ether, and ammonia. An application of the working medium is provided.

FIG.1

## Description

Technical Field

The present disclosure relates to a working medium for a heat cycle, a method of storing a working medium for a heat cycle, a method of producing a working medium for a heat cycle, a composition for a heat cycle system, and a storage container for a working medium for a heat cycle.

Background Art

Conventionally, various examinations of working media for heat cycles, such as refrigerants for refrigerating machines, refrigerants for air conditioners, working media for power generating systems (waste heat recovery power generation and the like), working media for latent heat transport apparatuses (heat pipes and the like), and secondary cooling media, have been made.

In recent years, hydrofluoroolefins (HFOs), that is, HFCs having carbon-carbon double bonds have been expected. Since carbon-carbon double bonds included in HFOs are easily decomposed by OH radicals in atmospheric air, HFOs have small impacts on the ozone layer and on global warming. In the present disclosure, a saturated hydrofluorocarbon is referred to as "HFC", which is distinguished from HFO, unless otherwise specified.

For example, Patent Literature 1 describes a working medium for a heat cycle, the working medium including: trifluoroethylene; and a first component including at least one substance selected from carbon dioxide, fluoromethane, trifluoroiodomethane, methane, ethane, propane, helium, neon, argon, krypton, xenon, nitrogen, or ammonia.

Citation List

Patent Literature

Patent Literature 1: International Publication No. WO 2016/194837

SUMMARY OF INVENTION

Technical Problem

In an environment in which a working medium for a heat cycle is used, suppression of a disproportionation reaction is demanded in the case of using a compound that reduces a global warming potential, improves cyclic performance, and exhibits a disproportionation reaction. A disproportionation reaction in a product life cycle can be suppressed not only in the state of operating an instrument, which can be a high-temperature and high-pressure condition but also at the time of transportation, storage, or stopping of operation of an instrument by suppressing the enrichment of the compound exhibiting a disproportionation reaction in a gas phase.

One embodiment of the present disclosure addresses a problem of providing: a working medium for a heat cycle, which has a low global warming potential, is excellent in cyclic performance, and enables suppression of the enrichment of trifluoroethylene in a gas phase; a method of storing a working medium for a heat cycle; and a method of producing a working medium for a heat cycle.

Another embodiment of the present disclosure addresses a problem of providing: a composition for a heat cycle system, including the above-described working medium for a heat cycle; and a storage container in which the above-described working medium for a heat cycle is stored.

Solution to Problem

The present disclosure includes the following aspects.

<1> A working medium for a heat cycle, wherein

the working medium includes
trifluoroethylene,
a low boiling point compound having a lower boiling point than a boiling point of the trifluoroethylene, and
high boiling point compounds having higher boiling points than the boiling point of the trifluoroethylene,
the low boiling point compound is at least one selected from a group consisting of carbon dioxide, hexafluoroethane, and fluoromethane, and

the high boiling point compounds are at least two selected from a group consisting of difluoromethane, 2,3,3,3-tetrafluoropropene, (E)-1,3,3,3-tetrafluoropropene, 3,3,3-trifluoropropene, tetrafluoromethane, 1,1,2,2-tetrafluoroethane, 1,1, 1-trifluoroethane, 1,1,1,2,3,3,3-heptafluoropropane, cyclopropane, isobutene, isobutane, dimethyl ether, and ammonia.

<2> The working medium for a heat cycle according to <1>, wherein

a content of the trifluoroethylene is from 30.0% by mass to 80.0% by mass with respect to a total content of the trifluoroethylene, the low boiling point compound, and the high boiling point compounds,
a content of the low boiling point compound is from 2.7% by mass to 60.0% by mass with respect to the total content,
a content of the high boiling point compounds is from 10.0% by mass to 67.3% by mass with respect to the total content, and
the total content of the trifluoroethylene, the low boiling point compound, and the high boiling point compounds is 90.0% by mass or more with respect to a total amount of the working medium for a heat cycle.

<3> The working medium for a heat cycle according to <1>, wherein

the low boiling point compound includes carbon dioxide;
the high boiling point compounds include difluoromethane and 2,3,3,3-tetrafluoropropene; and
in a case in which a content of the trifluoroethylene with respect to a total content of the trifluoroethylene, the carbon dioxide, the difluoromethane, and the 2,3,3,3-tetrafluoropropene is taken as A% by mass, a content of the carbon dioxide with respect to the total content is taken as B% by mass, a content of the difluoromethane with respect to the total content is taken as C% by mass, and a content of the 2,3,3,3-tetrafluoropropene with respect to the total content is taken as D% by mass,
A is from 30.0 to 80.0,
B is from 2.7 to 60.0,
C is from 5.0 to 45.0, and
D is from 5.0 to 62.3.

<4> The working medium for a heat cycle according to <3>, wherein

A is from 30.0 to 80.0,
B is from 2.7 to 15.0,
C is from 5.0 to 45.0, and
D satisfies the following Formula (1):

$$5.0 \leq D \leq (0.000003B^2 - 0.00053B + 0.00616) \times A^2 + (-0.00013B^2 + 0.07589B - 1.09581) \times A + (0.05608 \times B^2 - 5.19457B + 79.27652).$$

<5> The working medium for a heat cycle according to <1>, wherein

the low boiling point compound includes carbon dioxide;
the high boiling point compounds include difluoromethane and (E)-1,3,3,3-tetrafluoropropene; and
in a case in which a content of the trifluoroethylene with respect to a total content of the trifluoroethylene, the carbon dioxide, the difluoromethane, and the (E)-1,3,3,3-tetrafluoropropene is taken as E% by mass, a content of the carbon dioxide with respect to the total content is taken as F% by mass, a content of the difluoromethane with respect to the total content is taken as G% by mass, and a content of the (E)-1,3,3,3-tetrafluoropropene with respect to the total content is taken as H% by mass,
E is from 30.0 to 80.0,
F is from 3.0 to 60.0,
G is from 5.0 to 45.0, and
H is from 5.0 to 62.0.

<6> The working medium for a heat cycle according to <5>, wherein

E is from 30.0 to 80.0,

F is from 3.0 to 15.0,
G is from 5.0 to 45.0, and
H satisfies the following Formula (2):

$$5.0 \leq H \leq (0.000005F^2 - 0.00037F + 0.00301) \times E^2 + (-0.00087F^2 + 0.05802F - 0.54609) E + (0.05969F^2 - 3.39263F + 41.55565).$$

<7> A composition for a heat cycle system, wherein the composition includes: the working medium for a heat cycle according to any one of <1> to <6>; and a refrigerating machine oil.
<8> The composition for a heat cycle system according to <7>, wherein the refrigerating machine oil is at least one selected from a group consisting of polyalkylene glycol oils, polyol ester oils, polyvinyl ether oils, fluorine-containing oils, mineral oils, and hydrocarbon-based synthetic oils.
<9> A method of storing a working medium for a heat cycle, wherein

the method includes a step of storing a working medium for a heat cycle, the working medium including trifluoroethylene, a low boiling point compound having a lower boiling point than a boiling point of the trifluoroethylene, and high boiling point compounds having higher boiling points than the boiling point of the trifluoroethylene,
the low boiling point compound is at least one selected from a group consisting of carbon dioxide, hexafluoroethane, and fluoromethane, and
the high boiling point compounds are at least two selected from a group consisting of difluoromethane, 2,3,3,3-tetrafluoropropene, (E)-1,3,3,3-tetrafluoropropene, 3,3,3-trifluoropropene, tetrafluoromethane, 1,1,2,2-tetrafluoroethane, 1,1, 1-trifluoroethane, 1,1,1,2,3,3,3-heptafluoropropane, cyclopropane, isobutene, isobutane, dimethyl ether, and ammonia.

<10> A method of producing a working medium for a heat cycle, wherein

the method includes a step of mixing trifluoroethylene, a low boiling point compound having a lower boiling point than a boiling point of the trifluoroethylene, and high boiling point compounds having higher boiling points than the boiling point of the trifluoroethylene,
the low boiling point compound is at least one selected from a group consisting of carbon dioxide, hexafluoroethane, and fluoromethane, and
the high boiling point compounds are at least two selected from a group consisting of difluoromethane, 2,3,3,3-tetrafluoropropene, (E)-1,3,3,3-tetrafluoropropene, 3,3,3-trifluoropropene, tetrafluoromethane, 1,1,2,2-tetrafluoroethane, 1,1, 1-trifluoroethane, 1,1,1,2,3,3,3-heptafluoropropane, cyclopropane, isobutene, isobutane, dimethyl ether, and ammonia.

<11> A storage container for a working medium for a heat cycle, wherein

the storage container is an airtight storage container in which a working medium for a heat cycle, including trifluoroethylene, a low boiling point compound having a lower boiling point than a boiling point of the trifluoroethylene, and high boiling point compounds having higher boiling points than the boiling point of the trifluoroethylene, is stored in a state in which a gas phase and a liquid phase coexist,
the low boiling point compound is at least one selected from a group consisting of carbon dioxide, hexafluoroethane, and fluoromethane, and
the high boiling point compounds are at least two selected from a group consisting of difluoromethane, 2,3,3,3-tetrafluoropropene, (E)-1,3,3,3-tetrafluoropropene, 3,3,3-trifluoropropene, tetrafluoromethane, 1,1,2,2-tetrafluoroethane, 1,1, 1-trifluoroethane, 1,1,1,2,3,3,3-heptafluoropropane, cyclopropane, isobutene, isobutane, dimethyl ether, and ammonia.

Advantageous Effects of Invention

In accordance with one embodiment of the present disclosure, a working medium for a heat cycle, which has a low global warming potential, is excellent in cyclic performance, and enables suppression of the enrichment of trifluoroethylene in a gas phase, a method of storing a working medium for a heat cycle, and a method of producing a working medium for a heat cycle are provided.
In accordance with another embodiment of the present disclosure, a composition for a heat cycle system, including the above-described working medium for a heat cycle, and a storage container in which the above-described working medium for a heat cycle is stored are provided.

BRIEF DESCRIPTION OF DRAWINGS

[FIG. 1] FIG. 1 is a schematic configuration view illustrating a refrigeration cycle system which is an example of a heat cycle system.

[FIG. 2] FIG. 2 is a cycle diagram of a change of the state of a working medium in a refrigeration cycle system, the change being illustrated by a pressure-enthalpy diagram.

DESCRIPTION OF EMBODIMENTS

In the present disclosure, a numerical range expressed by "x to y" means a range including the values of x and y as the minimum and maximum values, respectively.

In a numerical range expressed in a stepwise manner in the present disclosure, the upper or lower limit value expressed in a certain numerical range may be replaced by the upper or lower limit value in another numerical range expressed in a stepwise manner. In a numerical range expressed in the present disclosure, the upper or lower limit value expressed in a certain numerical range may be replaced by values described in Examples.

In the present disclosure, a combination of two or more preferred aspects is a more preferred aspect.

In the present disclosure, in a case in which plural kinds of substances corresponding to each component exist, the amount of each component means, unless otherwise specified, the total amount of the plural kinds of substances.

In the present disclosure, a boiling point means a boiling point at atmospheric pressure (101.325 kPa).

[Working Medium for Heat Cycle]

A working medium for a heat cycle (hereinafter also referred to as "working medium") of the present disclosure includes trifluoroethylene (HFO-1123), a low boiling point compound having a lower boiling point than the boiling point of the HFO-1123, and high boiling point compounds having higher boiling points than the boiling point of the HFO-1123. In the working medium, the low boiling point compound is at least one selected from the group consisting of carbon dioxide, hexafluoroethane (R116), and fluoromethane (R41), and the high boiling point compounds are at least two selected from the group consisting of difluoromethane (HFC-32), 2,3,3,3-tetrafluoropropene (HFO-1234yf), (E)-1,3,3,3-tetrafluoropropene (HFO-1234ze (E)), 3,3,3-trifluoropropene (HFO-1243zf), tetrafluoromethane (PFC-14), 1,1,2,2-tetrafluoroethane (HFC-134), 1,1,1-trifluoroethane (HFC-143a), 1,1,1,2,3,3,3-heptafluoropropane (HFC-227ea), cyclopropane, isobutene, isobutane, dimethyl ether, and ammonia.

In the present disclosure, a compound having a lower boiling point than that of trifluoroethylene is also simply referred to as "low boiling point compound". A compound having a higher boiling point than that of trifluoroethylene is also simply referred to as "high boiling point compound". In a case in which a liquid is absent in view of the properties of a compound, a boiling point is read as a sublimation point.

In the present disclosure, a working medium means a heat transfer medium, and is a concept encompassing a refrigerant composition and a heat medium composition. The refrigerant composition is a medium primarily playing a role in cooling a heat source, and may also be used as a medium playing a role in heating. The heat medium composition is a medium primarily playing a role in heating, and may also be used as a medium playing a role in cooling a heat source.

The working medium of the present disclosure is for use in a heat cycle. Specifically, the working medium of the present disclosure is preferably used in a heat cycle system resulting in a series of changes in which a state is changed using heat absorption or heat dissipation, and is returned to an initial state again.

The working medium of the present disclosure is excellent in cyclic performance, and enables suppression of the enrichment of HFO-1123 in a gas phase. The reason for the above is unclear. However, the reason is presumed as follows.

The disproportionation reaction of HFO-1123 is known to proceed when a temperature, a pressure, and an ignition source reach specific threshold values in gas-phase space. Such a disproportionation reaction is an autolysis reaction. In the disproportionation reaction, heat is commonly generated. HFOs such as HFO-1234yf and HFO-1234ze (E) are known as compounds that do not exhibit a disproportionation reaction but exhibit high environmental performance. Conventionally, use of a mixture of HFO-1123 and a compound exhibiting no disproportionation reaction has been proposed as a method of suppressing the disproportionation reaction of HFO-1123. However, the boiling points of HFO-1234yf and HFO-1234ze (E) are higher than the boiling point of HFO-1123. Therefore, HFO-1123 migrates from a liquid phase to a gas phase due to gas-liquid equilibrium, and the concentration of HFO-1123 in the gas phase tends to increase in comparison with the concentration of HFO-1123 in the liquid phase in a case in which a working medium including HFO-1123 and a compound having a higher boiling point than that of HFO-1123 is stored in an airtight container. Thus, it has been possible that a composition enabling the disproportionation reaction of HFO-1123 is formed by increasing the concentration of HFO-1123 in a gas phase due to gas-liquid equilibrium even if a working medium with such a composition that the disproportionation reaction of HFO-1123 does not occur is prepared. Thus, the present inventor focused on an increase in the concentration of HFO-1123 (enrichment of HFO-1123) in a gas phase, and examined a method of suppressing the enrichment of HFO-1123 in the gas phase to suppress the disproportionation reaction of HFO-1123.

It was found that the enrichment of HFO-1123 in a gas phase is suppressed by mixing HFO-1123 with at least one low boiling point compound selected from the group consisting of carbon dioxide, R116, and R41. Moreover, it was found that excellent cyclic performance can be obtained while suppressing the enrichment of HFO-1123 in a gas phase by mixing at least one low boiling point compound selected from the group consisting of carbon dioxide, R116, and R41 with at least two high boiling point compounds selected from the group consisting of HFC-32, HFO-1234yf, HFO-1234ze (E), HFO-1243zf, PFC-14, HFC-134, HFC-143a, HFC-227ea, cyclopropane, isobutene, isobutane, dimethyl ether, and ammonia.

In contrast, Examples in Patent Literature 1 merely describe a working medium including HFO-1123, a first component such as carbon dioxide, and a second component such as HFC-32, and the like, but do not substantially describe a working medium including at least two high boiling point compounds. Patent Literature 1 does not focus on the enrichment of HFO-1123 in a gas phase.

Each component included in the working medium of the present disclosure is described in detail below.

The working medium of the present disclosure includes HFO-1123, a low boiling point compound, and a high boiling point compound.

The total content of HFO-1123, the low boiling point compound, and the high boiling point compounds in the working medium of the present disclosure is preferably 90.0% by mass or more, more preferably 95.0% by mass or more, and still more preferably 99.0% by mass or more with respect to the total amount of the working medium. The upper limit value of the total content of HFO-1123, the low boiling point compounds, and the high boiling point compounds is not particularly limited, and may be 100% by mass.

<HFO-1123>

The working medium of the present disclosure includes HFO-1123. HFO-1123 has the characteristics of having high refrigeration cycle performance, a low global warming potential (GWP), and low combustibility.

The boiling point of HFO-1123 is -61.239°C under atmospheric pressure.

The content of HFO-1123 is preferably 80.0% by mass or less, more preferably 70.0% by mass or less, and still more preferably 60.0% by mass or less with respect to the total content of HFO-1123, the low boiling point compound, and the high boiling point compounds from the viewpoint of a pressure and a critical temperature.

The content of HFO-1123 is preferably 30.0% by mass or more, more preferably 35.0% by mass or more, and still more preferably 40.0% by mass or more with respect to the total content of HFO-1123, the low boiling point compound, and the high boiling point compounds from the viewpoint of decreasing GWP, and improving a capacity per unit volume.

<Low Boiling Point Compound>

The working medium of the present disclosure includes the low boiling point compound having a lower boiling point than that of HFO-1123. The low boiling point compound is at least one selected from the group consisting of carbon dioxide, R116, and R41. The number of the kinds of such low boiling point compounds may be one, or may be two or more.

Each of carbon dioxide, R116, or R41 is a compound that does not exhibit a disproportionation reaction.

The above-described low boiling point compound has a lower boiling point than that of HFO-1123, and therefore more easily migrates to a gas phase than HFO-1123. Therefore, the inclusion of the above-described low boiling point compound in the working medium of the present disclosure causes the enrichment of HFO-1123 in a gas phase to be suppressed.

The content of the low boiling point compound is preferably 60.0% by mass or less, more preferably 15.0% by mass or less, still more preferably 12.0% by mass or less, and particularly preferably 10.0% by mass or less with respect to the total content of HFO-1123, the low boiling point compound, and the high boiling point compounds from the viewpoint of a pressure and a critical temperature.

The content of the low boiling point compound is preferably 2.7% by mass or more, more preferably 3.0% by mass or more, and still more preferably 3.5% by mass or more with respect to the total content of HFO-1123, the low boiling point compound, and the high boiling point compounds from the viewpoint of further exerting the effect of suppressing the enrichment of HFO-1123 in a gas phase. In the case of inclusion of two or more low boiling point compounds, the content of the low boiling point compounds means the total content of the two or more low boiling point compounds.

Especially, the low boiling point compound is preferably at least one selected from the group consisting of carbon dioxide and R41, and still more preferably carbon dioxide.

Carbon dioxide tends to have lower compatibility with a refrigerating machine oil (for example, polyalkylene glycol oil, polyol ester oil, polyvinyl ether oil, or the like) than that of an HFC or an HFO. Therefore, carbon dioxide is more easily concentrated in a gas phase than HFO-1123 in a case in which a refrigerating machine oil and a working medium including HFO-1123 and carbon dioxide coexist in an airtight container. The enrichment of HFO-1123 in a gas phase is suppressed by enriching carbon dioxide in the gas phase.

Carbon dioxide has the characteristics of having high refrigeration cycle performance and excellent heat transfer performance, and being incombustible.

In a case in which the working medium of the present disclosure includes carbon dioxide, the content of carbon dioxide is preferably 60.0% by mass or less, more preferably 15.0% by mass or less, still more preferably 12.0% by mass or less, and particularly preferably 10.0% by mass or less with respect to the total content of HFO-1123, the low boiling point compound, and the high boiling point compounds from the viewpoint of a pressure and a critical temperature.

The content of carbon dioxide is preferably 2.7% by mass or more, more preferably 3.0% by mass or more, and still more preferably 3.5% by mass or more with respect to the total content of HFO-1123, the low boiling point compound, and the high boiling point compounds from the viewpoint of further exerting the effect of suppressing the enrichment of HFO-1123 in a gas phase.

<High Boiling Point Compounds>

The working medium of the present disclosure includes the high boiling point compounds having higher boiling points than the boiling point of HFO-1123. The high boiling point compounds are at least two selected from the group consisting of HFC-32, HFO-1234yf, HFO-1234ze (E), HFO-1243zf, PFC-14, HFC-134, HFC-143a, HFC-227ea, cyclopropane, isobutene, isobutane, dimethyl ether, and ammonia. The number of the kinds of the high boiling point compounds may be two, or may be three or more.

It is difficult to decrease GWP and improve cyclic performance (for example, volume capacity, COP, temperature glide, pressure, or the like) by only one kind of such a high boiling point compound as described above. The working medium of the present disclosure includes the two or more high boiling point compounds, and therefore enables the cyclic performance to be improved in a well-balanced manner.

Each of HFC-32, HFO-1234yf, HFO-1234ze (E), HFO-1243zf, PFC-14, HFC-134, HFC-143a, HFC-227ea, cyclopropane, isobutene, isobutane, dimethyl ether, or ammonia is a compound that does not exhibit a disproportionation reaction.

The following combinations are preferred as combinations of the two high boiling point compounds

·HFC-32, HFO-1234yf
·HFC-32, HFO-1234ze (E)
·HFC-32, HFO-1243zf
·HFC-32, cyclopropane
·HFO-1234yf, cyclopropane
·HFO-1234ze (E), cyclopropane
·HFO-1234yf, HFO-1234ze (E)
·HFO-1234yf, HFO-1243zf
·Dimethyl ether, HFO-1234ze (E)

The content of the high boiling point compounds is preferably 67.3% by mass or less, more preferably 50.0% by mass or less, and still more preferably 40.0% by mass or less. The content of the high boiling point compounds is preferably 10.0% by mass or more, more preferably 15.0% by mass or more, and still more preferably 20.0% by mass or more. The content of the high boiling point compounds means the total content of the two or more high boiling point compounds.

Especially, such a high boiling point compound is preferably at least one selected from the group consisting of HFC-32, HFO-1234yf, HFO-1234ze (E), and dimethyl ether, and more preferably at least one selected from the group consisting of HFC-32, HFO-1234yf, and HFO-1234ze (E).

HFC-32 has the characteristics of having high refrigeration cycle performance, high azeotropy with HFO-1123, and low combustibility.

In a case in which the working medium of the present disclosure includes HFC-32, the content of HFC-32 is preferably 45.0% by mass or less, more preferably 40.0% by mass or less, and still more preferably 35% by mass from the viewpoint of decreasing GWP.

The content of HFC-32 is preferably 5.0% by mass or more, more preferably 7.0% by mass or more, and still more preferably 10.0% by mass or more from the viewpoint of improving a capacity per unit volume and of azeotropy with HFO-1123.

HFO-1234yf has low GWP and low combustibility, and has the action of decreasing a pressure by being mixed with HFO-1123.

In a case in which the working medium of the present disclosure includes HFO-1234yf, the content of HFO-1234yf is preferably 62.3% by mass or less, more preferably 50.0% by mass or less, and still more preferably 40.0% by mass or less from the viewpoint of improving a COP which is the coefficient of performance and of azeotropy with HFO-1123.

The content of HFO-1234yf is preferably 5.0% by mass or more, more preferably 7.0% by mass or more, and still more preferably 10.0% by mass or more from the viewpoint of decreasing GWP.

HFO-1234ze (E) has low GWP and low combustibility, and has the action of decreasing a pressure by being mixed with HFO-1123.

In a case in which the working medium of the present disclosure includes HFO-1234ze (E), the content of HFO-1234ze (E) is preferably 62.0% by mass or less, more preferably 50.0% by mass or less, and still more preferably 40.0% by mass or less from the viewpoint of improving a COP which is the coefficient of performance and of azeotropy with HFO-1123.

The content of HFO-1234ze (E) is preferably 5.0% by mass or more, more preferably 7.0% by mass or more, and still more preferably 10.0% by mass or more from the viewpoint of decreasing GWP.

Especially, it is preferable that in the working medium of the present disclosure, the content of HFO-1123 is from 30.0% by mass to 80.0% by mass with respect to the total content of HFO-1123, the low boiling point compound, and the high boiling point compounds, the content of the low boiling point compound is from 2.7% by mass to 60.0% by mass with respect to the total content described above, the content of the high boiling point compounds is from 10.0% by mass to 67.3% by mass with respect to the total content described above, and the total content of HFO-1123, the low boiling point compound, and the high boiling point compounds is 90.0% by mass or more with respect to the total amount of the working medium. The preferred content of each of HFO-1123, the low boiling point compound, or the high boiling point compounds is as described above.

The content of the low boiling point compound is preferably 40.0% by mass or less, and more preferably 20.0% by mass or less from the viewpoint of further improving a critical temperature.

The total content of HFO-1123, the low boiling point compound, and the high boiling point compounds is more preferably 95.0% by mass, and still more preferably 99.0% by mass or more with respect to the total amount of the working medium. The upper limit value of the above-described total content is not particularly limited, and may be 100% by mass.

The more preferred composition of the working medium of the present disclosure is described below.

(First Aspect)

In a first aspect of the working medium of the present disclosure, it is preferable that the low boiling point compound includes carbon dioxide, the high boiling point compounds include HFC-32 and HFO-1234yf, and in a case in which the content of HFO-1123 with respect to the total content of HFO-1123, carbon dioxide, HFC-32, and HFO-1234yf is taken as A% by mass, the content of carbon dioxide with respect to the total content described above is taken as B% by mass, the content of HFC-32 with respect to the total content described above is taken as C% by mass, and the content of HFO-1234yf with respect to the total content described above is taken as D% by mass, A is from 30.0 to 80.0, B is from 2.7 to 60.0, C is from 5.0 to 45.0, and D is from 5.0 to 62.3.

In a case in which A is 30.0 or more, GWP is decreased, and a capacity per unit volume is improved. In a case in which A is 80.0 or less, a pressure is decreased, and a critical temperature is increased.

In a case in which B is 2.7 or more, the effect of suppressing the enrichment of HFO-1123 in a gas phase is high. In a case in which B is 60.0 or less, a critical temperature is improved. B is preferably 40.0 or less, and more preferably 20.0 or less from the viewpoint of further improving the critical temperature.

In a case in which C is 5.0 or more, a capacity per unit volume is improved, and azeotropy with HFO-1123 is enhanced. In a case in which C is 45.0 or less, GWP is decreased.

In a case in which D is 5.0 or more, GWP is decreased. In a case in which D is 62.3 or less, a capacity per unit volume is improved, and azeotropy with HFO-1123 is enhanced.

The more preferred content of each of HFO-1123, carbon dioxide, HFC-32, or HFO-1234yf is as described above.

In the first aspect, the content of carbon dioxide is preferably 90.0% by mass or more, more preferably 95.0% by mass or more, and preferably 99.0% by mass or more with respect to the total amount of the low boiling point compound. The upper limit value of the content of carbon dioxide is not particularly limited, and may be 100% by mass. In other words, in the first aspect, the low boiling point compound may be carbon dioxide.

In the first aspect, the content of HFC-32 and HFO-1234yf is preferably 90.0% by mass or more, more preferably 95.0% by mass or more, and preferably 99.0% by mass or more with respect to the total amount of the high boiling point compounds. The upper limit value of the content of HFC-32 and HFO-1234yf is not particularly limited, and may be 100% by mass. In other words, the high boiling point compounds may be HFC-32 and HFO-1234yf in the first aspect.

In the first aspect, it is preferable that A is from 30.0 to 80.0, B is from 2.7 to 15.0, C is from 5.0 to 45.0, and D satisfies the following Formula (1):

$$5.0 \leq D \leq (0.000003B^2 - 0.00053B + 0.00616) \times A^2 + (-0.00013B^2 + 0.07589B - 1.09581) \times A + (0.05608 \times B^2 - 5.19457B + 79.27652).$$

A temperature glide is low, and a temperature glide of 7.0°C or less can be achieved in a case in which A is from 30.0 to 80.0, B is from 2.7 to 15.0, C is from 5.0 to 45.0, and D satisfies Formula (1).

(Second Aspect)

In a second aspect of the working medium of the present disclosure, it is preferable that the low boiling point compound includes carbon dioxide, the high boiling point compounds include HFC-32 and HFO-1234ze (E), and in a case in which the content of HFO-1123 with respect to the total content of HFO-1123, carbon dioxide, HFC-32, and HFO-1234ze (E) is taken as E% by mass, the content of carbon dioxide with respect to the total content described above is taken as F% by mass, the content of HFC-32 with respect to the total content described above is taken as G% by mass, and the content of HFO-1234ze (E) with respect to the total content described above is taken as H% by mass, E is from 30.0 to 80.0, F is from 3.0 to 60.0, G is from 5.0 to 45.0, and H is from 5.0 to 62.0.

In a case in which E is 30.0 or more, GWP is decreased, and a capacity per unit volume is improved. In a case in which E is 80.0 or less, a pressure is decreased, and a critical temperature is increased.

In a case in which F is 3.0 or more, the effect of suppressing the enrichment of HFO-1123 in a gas phase is high. In a case in which F is 60.0 or less, a critical temperature is improved. F is preferably 40.0 or less, and more preferably 20.0 or less from the viewpoint of further improving the critical temperature.

In a case in which G is 5.0 or more, a capacity per unit volume is improved, and azeotropy with HFO-1123 is enhanced. In a case in which G is 45.0 or less, GWP is decreased.

In a case in which H is 5.0 or more, GWP is decreased. In a case in which H is 62.0 or less, a capacity per unit volume is improved, and azeotropy with HFO-1123 is enhanced.

The more preferred content of each of HFO-1123, carbon dioxide, HFC-32, or HFO-1234ze (E) is as described above.

In the second aspect, the content of carbon dioxide is preferably 90.0% by mass or more, more preferably 95.0% by mass or more, and preferably 99.0% by mass or more with respect to the total amount of the low boiling point compound. The upper limit value of the content of carbon dioxide is not particularly limited, and may be 100% by mass. In other words, in the second aspect, the low boiling point compound may be carbon dioxide.

In the second aspect, the content of HFC-32 and HFO-1234ze (E) is preferably 90.0% by mass or more, more preferably 95.0% by mass or more, and preferably 99.0% by mass or more with respect to the total amount of the high boiling point compounds. The upper limit value of the content of HFC-32 and HFO-1234ze (E) is not particularly limited, and may be 100% by mass. In other words, the high boiling point compounds may be HFC-32 and HFO-1234ze (E) in the second aspect.

In the second aspect, it is preferable that E is from 30.0 to 80.0, F is from 3.0 to 15.0, G is from 5.0 to 45.0, and H satisfies the following Formula (2):

$$5.0 \leq H \leq (0.000005F^2 - 0.00037F + 0.00301) \times E^2 + (-0.00087F^2 + 0.05802F - 0.54609) E + (0.05969F^2 - 3.39263F + 41.55565).$$

A temperature glide is low, and a temperature glide of 7.0°C or less can be achieved in a case in which E is from 30.0 to 80.0, F is from 3.0 to 15.0, G is from 5.0 to 45.0, and H satisfies Formula (2).

The working medium of the present disclosure may include a compound commonly used as an optional component in a working medium, as well as HFO-1123, the above-described low boiling point compound, and the above-described high boiling point compounds. Examples of the optional component include HFCs, HFOs, CFOs, HCFOs, halogenated compounds containing iodine and bromine, and hydrocarbons, other than HFO-1123, the low boiling point compound, and the high boiling point compounds. The optional component may also be a compound that is vaporized or liquefied with HFO-1123. The number of the kinds of such optional components may be only one, or may be two or more.

In the present disclosure, "halogenated compound" means an organic compound having a halogen atom.

Examples of HFCs which are optional components include 1,1-difluoroethane (HFC-152a), pentafluoropropane, hexafluoropropane, pentafluorobutane, and heptafluorocyclopentane.

Examples of HFOs which are optional components include 1,1-difluoroethylene (HFO-1132a), (Z)-1,2-difluoroethylene (HFO-1132 (Z)), (E)-1,2-difluoroethylene (HFO-1132 (E)), 2-fluoropropene (HFO-1261yf), 1, 1,2-trifluoropropene (HFO-1243yc), 1,2,3,3,3-pentafluoropropene (HFO-1225ye), and 3,3,3-trifluoropropene (HFO-1243zf).

Examples of CFOs which are optional components 1,1-dichloro-2,3,3,3-tetrafluoropropene (CFO-1214ya), 1,3-dichloro-1,2,3,3-tetrafluoropropene (CFO-1214yb), and 1,2-dichloro-1,2-difluoroethylene (CFO-1112).

Examples of HCFOs which are optional components include 1-chloro-2,3,3,3-tetrafluoropropene (HCFO-1224yd) and 1-chloro-1,2-difluoroethylene (HCFO-1122).

Examples of halogenated compounds containing iodine and bromine, which are optional components, include monoiodomethane ($CH_3I$), diiodomethane ($CH_2I_2$), dibromomethane ($CH_2Br_2$), bromomethane ($CH_3Br$), dichloromethane ($CH_2Cl_2$), chloroiodomethane ($CH_2ClI$), dibromochloromethane ($CHBr_2Cl$), methane tetraiodide ($CI_4$), carbon tetrabromide ($CBr_4$), bromotrichloromethane ($CBrCl_3$), dibromodichloromethane ($CBr_2Cl_2$), tribromofluoromethane ($CBr_3F$), fluorodiiodomethane ($CHFI_2$), difluoroiodomethane ($CHF_2I$), difluorodiiodomethane ($CF_2I_2$), dibromodifluoromethane ($CBr_2F_2$), trifluoroiodomethane ($CF_3I$), and 1,1,1-trifluoro-2-iodoethane ($CF_3CH_2I$).

Examples of hydrocarbons which are optional components include propylene, butane, pentane, and isopentane.

In a case in which the working medium of the present disclosure includes an optional component, the content of the optional component is preferably less than 10.0% by mass, more preferably 8.0% by mass or less, and still more preferably 5.0% by mass or less with respect to the total amount of the working medium.

As a water content measured by the Karl Fischer coulometric titration method, the content of water in the working medium is preferably 20 ppm by mass or less, and particularly preferably 15 ppm by mass or less with respect to the total amount of the working medium. In a case in which the content of water is 20 ppm by mass or less, freezing in, for example, a capillary tube which is an example of a pressure reduction apparatus in a heat cycle system, hydrolysis of a working medium or a refrigerating machine oil, material degradation caused by an acid constituent generated in an apparatus, generation of contaminants, and the like are suppressed.

The content of air in the working medium is preferably less than 15000 ppm by mass, and particularly preferably 8000 ppm by mass or less as an air concentration measured by a gas chromatogram. In a case in which the content of air is less than 15000 ppm by mass, poor heat transfer in a condenser or an evaporator, and an increase in working pressure are suppressed. In particular, oxygen in air is suppressed from reacting with the working medium or a refrigerating machine oil, and from decomposing.

The working medium may include impurities by-produced in the case of production of a specific component and the like, and unavoidable components such as a solvent, used in the case of the production. The total content of the unavoidable components is preferably 1.0% by mass or less, more preferably 0.5% by mass or less, and still more preferably 0.1% by mass or less with respect to the total amount of the working medium from the viewpoint of securing stability. From the viewpoint of simplifying a purification step in the production of the specific component and the like, the total content of the unavoidable components may be 50.0 ppm by mass or more, and may be 100.0 ppm by mass or more.

Examples of the unavoidable components include hydrogen fluoride, methane, chloromethane, dichlorodifluoromethane (CFC-12), 1,1,2-trichloro-1,2,2-trifluoroethane (CFC-113), chlorodifluoromethane (HCFC-22), chlorofluoromethane (HCFC-31), dichlorotrifluoroethane (HCFC-123), 1,2-dichloro-1,1,2-trifluoroethane (HCFC-123a), 1-chloro-1,2,2,2-tetrafluoroethane (HCFC-124), 1-chloro-1,1,2,2-tetrafluoroethane (HCFC-124a), chlorotrifluoroethane (HCFC-133), 2-chloro-1,1,1-trifluoroethane (HCFC-133a), 1-chloro-1,1,2-trifluoroethane (HCFC-133b), 2-chloro-1,1-difluoroethane (HCFC-142), 1-chloro-1,1-difluoroethane (HCFC-142b), trifluoromethane (HFC-23), pentafluoroethane (HFC-125), 1,1,2,2-tetrafluoroethane (HFC-134), 1,1,1,2-tetrafluoroethane (HFC-134a), 1, 1,2-trifluoroethane (HFC-143), 1,1,1-trifluoroethane (HFC-143a), 1,1-difluoroethane (HFC-152a), 1,1,1,2,2,3,3-heptafluoropropane (HFC-227ca), 1,1,1,2,3,3,3-heptafluoropropane (HFC-227ea), 1,1,1,3,3,3-hexafluoropropane (HFC-236fa), 1,1,1,2,3,3-hexafluoropropane (HFC-236ea), 1,1-difluoroethylene (HFO-1132a), (E)-1,2-difluoroethylene (HFO-1132 (E)), (Z)-1,2-difluoroethylene (HFO-1132 (Z)), fluoroethylene (HFO-1141), 1,1,3,3,3-pentafluoropropene (HFO-1225zc), (Z)-1,3,3,3-tetrafluoropropene (HFO-1234ze (Z)), 3,3,3-trifluoropropene (HFO-1243zf), 3,3-difluoropropene (HFO-1252zf), 1-chloro-2,2-difluoroethylene (HCFO-1122), (E)-1-chloro-1,2-difluoroethylene, (Z)-1-chloro-1,2-difluoroethylene, (E)-1-chloro-2-fluoroethylene (HCFO-1131 (E)), (Z)-1-chloro-2-fluoroethylene (HCFO-1131 (Z)), (E)-1,2-dichloro-1,2-difluoroethylene (CFO-1112 (E)), (Z)-1,2-dichloro-1,2-difluoroethylene (CFO-1112 (Z)), chlorotrifluoroethylene (CFO-1113), tetrafluoroethylene (FO-1114), hexafluoropropene (FO-1216), and perfluorocyclobutane.

<Cyclic Performance>

Cyclic performance which is a property required in the case of applying the working medium to a heat cycle system can be evaluated based on the coefficient of performance (also referred to as "COP" in the present disclosure) and a capacity (also referred to as "CAP" in the present disclosure) per unit volume (suction volume of compression machine). The capacity is a freezing capacity in a case in which the heat cycle system is a refrigeration cycle system. Examples of examination items in the case of applying the working medium to the refrigeration cycle system include a temperature gradient in an evaporator (also referred to as "temperature glide" in the present disclosure), a condensing pressure, an evaporating pressure, and a compression ratio, as well as the cyclic performance described above. Specifically, each item is calculated by, for example, a method described later using a standard refrigerating cycle under temperature conditions described below. The condensing pressure, the evaporating pressure, and the compression ratio are evaluated in terms of differences and relative values based on the value of HFC-32, and CAP and COP are evaluated in terms of differences and relative values based on the value of R410A.

(Temperature Conditions in Standard Refrigerating Cycle)

Evaporating temperature: 5°C (the average temperature of an evaporation start temperature and an evaporation completion temperature in the case of a non-azeotropic mixture)
Condensation temperature: 40°C (the average temperature of a condensation start temperature and a condensation completion temperature in the case of a non-azeotropic mixture)
Degree of supercooling (SC): 5°C
Degree of superheating (SH): 5°C
Compression machine efficiency: 0.7

(Refrigeration Cycle System)

A refrigeration cycle system is described as an example of a heat cycle system.
The refrigeration cycle system is a system in which a working medium removes thermal energy from a loaded fluid in an evaporator, to cool the loaded fluid and to result in cooling to a lower temperature.

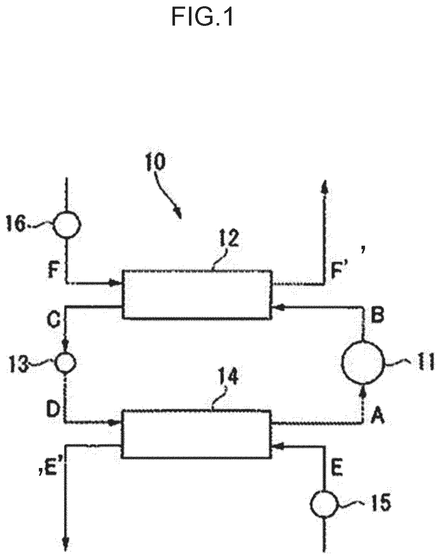

FIG. 1 is a schematic configuration view illustrating an example of the refrigeration cycle system of the present disclosure. The refrigeration cycle system 10 generally includes: a compression machine 11 that compresses working medium vapor A to form working medium vapor B at a high temperature and a high pressure; a condenser 12 that cools and liquefies the working medium vapor B discharged from the compression machine 11 to form a working medium C at a low temperature and a high pressure; an expansion valve 13 that expands the working medium C discharged from the condenser 12 to form a working medium D at a low temperature and a low pressure; an evaporator 14 that heats the working medium D discharged from the expansion valve 13 to form the working medium vapor A at a high temperature and a low pressure; a pump 15 that feeds a loaded fluid E to the evaporator 14; and a pump 16 that feeds a fluid F to the condenser 12.
A cycle of (i) to (iv) described below is repeated in the refrigeration cycle system 10.

(i) The compression machine 11 compresses the working medium vapor A discharged from the evaporator 14 to form the working medium vapor B at a high temperature and a high pressure (hereinafter referred to as "AB process").
(ii) The condenser 12 cools, with the fluid F, the working medium vapor B discharged from the compression machine 11, and liquefies the working medium vapor B to form the working medium C at a low temperature and a high pressure. In this case, the fluid F is heated and becomes a fluid F', which is discharged from the condenser 12 (hereinafter referred to as "BC process").
(iii) The expansion valve 13 expands the working medium C discharged from the condenser 12 to form the working medium D at a low temperature and a low pressure (hereinafter referred to as "CD process").
(iv) The evaporator 14 heats, with the loaded fluid E, the working medium D discharged from the expansion valve 13, to form the working medium vapor A at a high temperature and a low pressure. In this case, the loaded fluid E is cooled and becomes a loaded fluid E', which is discharged from the evaporator 14 (hereinafter referred to as "DA process").

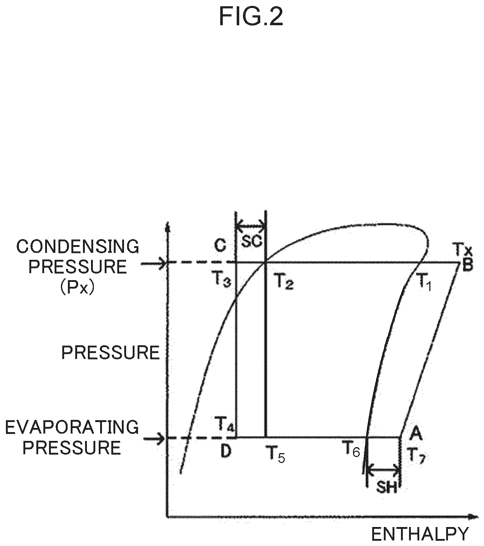

The refrigeration cycle system 10 is a cycle system including an adiabatic/isentropic change, an isenthalpic change, and an isobaric change. A change of the state of the working medium can be illustrated by a pressure-enthalpy line (curved line) diagram indicated in FIG. 2, in which the vertexes of the line are A, B, C, and D.
The AB process is a process in which the compression machine 11 performs adiabatic compression to allow the working medium vapor A at a low temperature and a low pressure to be the working medium vapor B at a high temperature and a high pressure, and is indicated by the AB line in FIG. 2. As described later, the working medium vapor A is introduced into the compression machine 11 in an overheating state, and the obtained working medium vapor B is also vapor in an overheating state. A compression machine suction gas density is a density ($\rho$s) in the state of A in FIG. 2. A compression machine discharge gas temperature (discharge temperature) is a temperature (Tx) in the state of B in FIG. 2, and the maximum temperature in the refrigeration cycle. A compression machine discharge pressure (discharge pressure) is a pressure (Px) in the state of B in FIG. 2, and the maximum pressure in the refrigeration cycle. Since the BC process is isobaric cooling, the discharge pressure shows the same value as a condensing pressure (Pc). Thus, for convenience, the condensing pressure is denoted by Px in FIG. 2.

The BC process is a process in which the condenser 12 performs isobaric cooling to allow the working medium vapor B at a high temperature and a high pressure to be the working medium C at a low temperature and a high pressure, and is indicated by the BC line in FIG. 2. The pressure in this case is a condensing pressure. Of intersection points of the pressure-enthalpy line and the BC line, an intersection point T1 in a higher enthalpy side is a condensation temperature, and an intersection Point T2 in a lower enthalpy side is a condensation boiling point temperature. A temperature gradient in the condenser in a case in which the working medium is a non-azeotropic mixture medium is expressed as a difference between T1 and T2.

The CD process is a process in which the expansion valve 13 performs isenthalpic expansion to allow the working medium C at a low temperature and a high pressure to be the working medium D at a low temperature and a low pressure, and is indicated by the CD line in FIG. 2. In a case in which the temperature of the working medium C at a low temperature and a high pressure is denoted by T3, T2 - T3 means the degree of supercooling (SC) of the working medium in the cycle of (i) to (iv).

The DA process is a process in which the evaporator 14 performs isobaric heating to return the working medium D at a low temperature and a low pressure to the working medium vapor A at a high temperature and a low pressure, and is indicated by the DA line in FIG. 2. The pressure in this case is an evaporating pressure. Of intersection points of the pressure-enthalpy line and the DA line, an intersection point T6 in a higher enthalpy side is an evaporating temperature. A temperature gradient in the evaporator in a case in which the working medium is a non-azeotropic mixture medium is expressed as a difference between T6 and T4. In a case in which the temperature of the working medium vapor A is denoted by T7, T7 - T6 means the degree of superheating (SH) of the working medium in the cycle of (i) to (iv). T4 denotes the temperature of the working medium D.

Each of the CAP or COP of the working medium is determined from the following Formulae (11), (12), (13), and (14) using each enthalpy, hA, hB, hC, hD, and refrigerant mass circulating load qmr of the working medium in each state of A (at low temperature and low pressure after evaporation), B (at high temperature and high pressure after compression), C (at low temperature and high pressure after condensation), or D (at low temperature and low pressure after expansion). It is supposed that pressure losses are not produced in a pipe and a heat exchanger.

In a case in which the loss work of the compression machine is applied as heat to the working medium, using compression machine efficiency $\eta$, working medium vapor B' following the AB step is expressed in the following Formula using hA, hB, and $\eta$.

$$hB' = hA + (hB - hA)/\eta$$

The cyclic performance of the working medium was determined by carrying out the refrigeration cycle theoretical calculation of the working medium under the temperature conditions of the standard refrigerating cycle described above using National Institute of Science and Technology (NIST) Reference Fluid Thermodynamic and Transport Properties Database (REFPROP 10.0).

The data of the physical properties of HFO-1123, and a mixing rule were determined using values described in Akasaka, R., Higashi, Y, Sakoda, N., Fukuda, S., and Lemmon, E.W., Thermodynamic properties of trifluoroethene (R1123): (p, $\rho$, T) behavior and fundamental equation of state, International Journal of Refrigeration., 2020, 119, 457-467, and Akasaka, R., and Lemmon, E.W., A New Fundamental Equation of State for R1123 and its Applications to Mixture Models for Mixtures with R32 and R1234yf", The 6th IIR Conference on Thermophysical Properties and Transfer Processes of Refrigerants, 2021.

$$CAP = (hA - hD) \times \rho s \quad (11)$$

$$COP = Q/P = qmr \, (hA - hD)/qmr \, (hB - hA) = (hA - hD)/(hB - hA) \quad (12)$$

$$Q = qmr \, (hA - hD) \quad (13)$$

$$P = qmr \, (hB - hA) \quad (14)$$

COP and P are expressed in the following Formulae in consideration of compression machine efficiency.

$$COP = Q/P = (hA - hD)/(hB' - hA) \ (15)$$

$$P = qmr \ (hB' - hA) \qquad (16)$$

<Temperature Glide (Temperature Gradient)>

A temperature glide is an index for measuring a difference between compositions in liquid and gas phases in a mixture working medium. The temperature glide is defined as a characteristic in that the start temperature and completion temperature of evaporation in a heat exchanger, for example, an evaporator, or of condensation in a condenser are different. A temperature glide in an azeotropic mixture medium is zero, and a temperature gradient in a pseudo-azeotropic mixture such as R410A is extremely close to zero.

A case in which the temperature glide is great is problematic because of, for example, resulting in a decrease in inlet temperature in the evaporator, whereby the possibility of frost formation is increased. It is common that a working medium and a heat source fluid such as water or air, flowing through a heat exchanger, are allowed to be counterflows in order to improve heat exchange efficiency in a heat cycle system. The temperature difference of the heat source fluid is small in a stable operation state. Therefore, it is difficult to obtain a heat cycle system having favorable energy efficiency in the case of a non-azeotropic mixture medium having a great temperature glide. Therefore, in the case of using a mixture as a working medium, the working medium having a suitable temperature glide is desired.

In addition, a non-azeotropic mixture medium has a problem in that a composition change occurs in the case of filling the non-azeotropic mixture medium from a pressure container into a frozen air conditioner. In a case in which a refrigerant leaks from the frozen air conditioner, the possibility of changing the composition of the refrigerant in the frozen air conditioner is very high, and it is difficult to restore the composition of the refrigerant into an initial state. In contrast, an azeotropic or pseudo-azeotropic mixture medium enables the above-described problem to be avoided.

<Compression Ratio>

A compression ratio is expressed as condensing pressure Pc (MPa)/evaporating pressure Pe (MPa) in a refrigeration cycle.

A lower condensing pressure or a more evaporating pressure in a refrigeration cycle results in a lower compression ratio. A lower compression ratio causes the volumetric efficiency of a compression machine to be greater, and therefore results in an increase in refrigerant circulating load, and in improvement in instrument performance.

In the present disclosure, the compression ratio is expressed as a relative compression ratio with respect to HFC-32.

<Critical Temperature>

A critical point is an end point of a saturated liquid line and a saturated vapor line in a higher pressure and higher temperature side. A temperature at this point is a critical temperature. At not less than the critical point, neither evaporation phenomenon nor liquefaction phenomenon occurs, there is no distinction between a liquid phase and a gas phase, and no phase change exists.

In the case of using the working medium of the present disclosure in a refrigeration cycle apparatus, the temperature of a coolant after heat exchange approaches or exceeds the critical temperature in an area with a lower temperature than the critical temperature under a temperature condition where the temperature of air that cools a condenser is comparatively high, and therefore, a problem occurs in that it is impossible to liquefy (condense) the working medium, and cooling performance is deteriorated. Therefore, the higher critical temperature of the working medium is further preferred.

<Global Warming Potential (GWP)>

In the present disclosure, GWP is set at a value in 100 years in the Intergovernmental Panel on Climate Change (IPCC) Fifth Assessment Report (2013), unless otherwise specified.

GWP in a mixture is set at a weighted mean by a composition mass. In examination of calculation of GWP in a mixture, a GWP of 1 or less is regarded as a GWP of 1.

<Enrichment Level of HFO-1123 in Gas Phase>

In the present disclosure, the enrichment level of HFO-1123 in a gas phase (hereinafter referred to as "enrichment level of HFO-1123 ") is a concentration (% by mass) obtained by subtracting X from Xv in a case in which the concentration of HFO-1123 at the time of filling the working medium into an airtight container is taken as X % by mass, and the concentration of HFO-1123 in a gas phase is taken as Xv % by mass.

The present inventors obtained the following findings about parameters influencing evaluation results in the case of evaluating the enrichment level of HFO-1123.

In the composition of a working medium in the case of filling the working medium into an airtight container, lower azeotropy tends to result in the higher enrichment level of HFO-1123.

The lower filling rate of a working medium in the case of filling the working medium into the airtight container tends to result in the higher enrichment level of HFO-1123.

The lower storage temperature of a working medium in an airtight container results in the higher enrichment level of HFO-1123.

Filling into an airtight container was performed at 54.4°C and a filling rate of 15%, and the enrichment level of HFO-1123 was evaluated in a gas-liquid equilibrium state at - 40°C on the basis of the findings described above, with reference to initial conditions for leaking from a container and an instrument in storage, transportation, and use, for specifying the worst case of fractionation for flammability (WCFF) in the ANSI/ASHRAE34-2016 standard in the U.S.

The concentration of the gas phase in the working medium was determined by carrying out vapor-liquid equilibrium calculation under the conditions described above using National Institute of Science and Technology (NIST) Reference Fluid Thermodynamic and Transport Properties Database (REFPROP 10.0) and National Institute of Science and Technology (NIST) Standard Reference Data Base REFLEAK Version 6.0.

The data of the physical properties of HFO-1123, and a mixing rule were determined using values described in Akasaka, R., Higashi, Y, Sakoda, N., Fukuda, S., and Lemmon, E.W., Thermodynamic properties of trifluoroethene (R1123): (p, $\rho$, T) behavior and fundamental equation of state, International Journal of Refrigeration., 2020, 119, 457-467, and Akasaka, R., and Lemmon, E.W., A New Fundamental Equation of State for R1123 and its Applications to Mixture Models for Mixtures with R32 and R1234yf", The 6th IIR Conference on Thermophysical Properties and Transfer Processes of Refrigerants, 2021.

The enrichment level (% by mass) of HFO-1123 is expressed as Xv - X in a case in which the concentration of HFO-1123 at the time of filling the working medium of the present disclosure is taken as X% by mass, and the concentration of HFO-1123 in a gas phase after storage is taken as Xv% by mass, as described above.

A composition obtained by removing carbon dioxide from the working medium of the present disclosure was prepared in order to evaluate whether or not the enrichment of HFO-1123 in a gas phase was suppressed. The enrichment level (% by mass) of HFO-1123 is expressed as xv - x in a case in which the concentration of HFO-1123 at the time of filling the composition is taken as x% by mass, and the concentration of HFO-1123 in the gas phase after storage is taken as xv% by mass.

A comparison between the working medium of the present disclosure and a composition excluding carbon dioxide was made to calculate the degree of a reduction in the enrichment level of HFO-1123 (hereinafter also referred to as "enrichment reduction degree").

The enrichment reduction degree is calculated based on the following Formula:

$$\text{Enrichment reduction degree (\%)} = [\{(xv - x) - (Xv - X)\}/(xv - x)] \times 100.$$

A higher enrichment reduction degree is considered to result in the higher effect of suppressing the enrichment of HFO-1123 in a gas phase.

The enrichment reduction degree is preferably 20% or more, and more preferably 45% or more.

[Composition for Heat Cycle System]

A composition for a heat cycle system of the present disclosure preferably includes: the working medium for a heat cycle of the present disclosure; and a refrigerating machine oil.

(Refrigerating Machine Oil)

A conventionally known refrigerating machine oil used in a composition for a heat cycle system can be used as the refrigerating machine oil. Specific examples of the refrigerating machine oil include oxygen-containing synthetic oils (ester-based refrigerating machine oils, ether-based refrigerating machine oils, and the like), fluorine-based refrigerating machine oils, mineral-based refrigerating machine oils, and hydrocarbon-based synthetic oils.

Examples of the ester-based refrigerating machine oils include dibasic acid ester oils, polyol ester oils, complex ester oils, and polyol carbonic acid ester oils.

Such a dibasic acid ester oil is preferably an ester of a dibasic acid having from 5 to 10 carbon atoms (glutaric acid, adipic acid, pimelic acid, suberic acid, azelaic acid, sebacic acid, or the like) and a monohydric alcohol having a straight-chain or branched alkyl group and from 1 to 15 carbon atoms (methanol, ethanol, propanol, butanol, pentanol, hexanol, heptanol, octanol, nonanol, decanol, undecanol, dodecanol, tridecanol, tetradecanol, pentadecanol, or the like). The dibasic acid ester oil is preferably ditridecyl glutarate, di(2-ethylhexyl) adipate, diisodecyl adipate, ditridecyl adipate, or di(3-ethylhexyl) sebacate.

Such a polyol ester oil is preferably an ester of a diol (ethylene glycol, 1,3-propanediol, propylene glycol, 1,4-butanediol, 1,2-butanediol, 1,5-pentadiol, neopentyl glycol, 1,7-heptanediol, 1,12-dodecanediol, or the like) or a polyol having from 3 to 20 hydroxyl groups (trimethylolethane, trimethylolpropane, trimethylolbutane, pentaerythritol, glycerin, sorbitol, sorbitan, a sorbitol glycerin condensate, or the like), and a fatty acid having from 6 to 20 carbon atoms (a straight-chain or branched fatty acid such as hexanoic acid, heptanoic acid, octanoic acid, nonanoic acid, decanoic acid, undecanoic acid, dodecanoic acid, eicosanoic acid, or oleic acid, a so-called neo acid having a quaternary $\alpha$ carbon atom, or the like). These polyol ester oils may have a free hydroxyl group.

Such a polyol ester oil is preferably an ester of a hindered alcohol (neopentyl glycol, trimethylolethane, trimethylolpropane, trimethylolbutane, pentaerythritol, or the like), and more preferably trimethylolpropane tripelargonate, pentaerythritol 2-ethylhexanoate, or pentaerythritol tetrapelargonate.

Such a complex ester oil is an ester of a fatty acid and a dibasic acid, and a monohydric alcohol and a polyol. As the fatty acid, the dibasic acid, the monohydric alcohol, and the polyol, a fatty acid, a dibasic acid, a monohydric alcohol, and a polyol similar to those described above can be used.

Such a polyol carbonic acid ester oil is an ester of carbonic acid and a polyol. Examples of the polyol include diols similar to those described above and polyols similar to those described above. Such a polyol carbonic acid ester oil may be a ring-opened polymer of a cyclic alkylene carbonate.

Examples of the ether-based refrigerating machine oils include polyvinyl ether oils and polyoxyalkylene oils.

Examples of the polyvinyl ether oils include a polymer obtained by polymerizing a vinyl ether monomer such as alkyl vinyl ether, and a copolymer obtained by copolymerizing a vinyl ether monomer and a hydrocarbon monomer having an olefinic double bond.

The number of the kinds of such vinyl ether monomers may be one, or may be two or more.

Examples of the hydrocarbon monomer having an olefinic double bond include ethylene, propylene, various butenes, various pentenes, various hexenes, various heptenes, various octenes, diisobutylene, triisobutylene, styrene, $\alpha$-methylstyrene, and various alkylsubstituted styrenes. The number of the kinds of such hydrocarbon monomers having olefinic double bonds may be one, or may be two or more.

Such a polyvinyl ether copolymer may be either a block copolymer or a random copolymer. The number of the kinds of such polyvinyl ether oils may be one, or may be two or more.

Examples of the polyoxyalkylene oils include: polyoxyalkylene monools and polyoxyalkylene polyols; alkyletherified products of polyoxyalkylene monools or polyoxyalkylene polyols; and esterified products of polyoxyalkylene monools or polyoxyalkylene polyols.

Such a polyoxyalkylene monool and such a polyoxyalkylene polyol can be produced by a method of, for example, ring-opening addition polymerization of an alkylene oxide having from 2 to 4 carbon atoms (ethylene oxide, propylene oxide, or the like) with an initiator such as water or a hydroxyl group-containing compound in the presence of a catalyst such as an alkali hydroxide. Oxyalkylene units in a polyalkylene chain may be identical in one molecule, or two or more kinds of oxyalkylene units may be included. At least an oxypropylene unit is preferably included in one molecule.

Examples of the initiator used in the reaction include: water; monohydric alcohols such as methanol and butanol; and polyvalent alcohols such as ethylene glycol, propylene glycol, pentaerythritol, and glycerol.

Preferred examples of the polyoxyalkylene oils include alkyletherified products or esterified products of polyoxyalkylene monools or polyoxyalkylene polyols. Such polyoxyalkylene oils are preferably polyalkylene glycol oils. **In** particular, an alkyletherified product of polyalkylene glycol, of which the terminal hydroxyl group is capped with an alkyl group such as methyl group, referred to as a polyglycol oil, is preferred.

Examples of the fluorine-based refrigerating machine oils include compounds in which the hydrogen atoms of synthetic oils (mineral oils described later, poly $\alpha$-olefin, alkylbenzene, alkylnaphthalene, and the like) are substituted with fluorine atoms, fluorine-containing oils, perfluoropolyether oils, and fluorinated silicone oils.

Examples of the mineral-based refrigerating machine oils include mineral oils (for example, paraffin-based mineral oils and naphthenic mineral oils) obtained by purifying refrigerating machine oil fractions, obtained by distilling crude oil under atmospheric or reduced pressure, by appropriate combinations of purification treatments (solvent deasphalting, solvent extraction, hydrocracking, solvent dewaxing, catalytic dewaxing, hydrogenation refining, clay treatment, and the like).

Examples of the hydrocarbon-based synthetic oils include poly $\alpha$-olefin, alkylbenzene, and alkylnaphthalene.

The number of the kinds of such refrigerating machine oils included in the composition for a heat cycle system may be one, or may be two or more.

Especially, the refrigerating machine oil is preferably at least one selected from the group consisting of polyalkylene glycol oils, polyol ester oils, polyvinyl ether oils, fluorine-containing oils, mineral oils, and hydrocarbon-based synthetic oils.

The above-described refrigerating machine oil may further include at least one selected from the group consisting of antioxidants, extreme pressure agents, acid-acceptors, oxygen scavengers, copper deactivators, antirust agents, oil-based agents, and antifoaming agents.

It is acceptable that the content of the refrigerating machine oil in the composition for a heat cycle system is in a range in which the effects of the present disclosure are not considerably deteriorated. The content is preferably from 10 parts by mass to 100 parts by mass are preferable, and more preferably from 20 parts by mass to 50 parts by mass with respect to 100 parts by mass of the working medium.

(Additive)

The composition for a heat cycle system may include at least one known additive selected from the group consisting of tracers, stabilizers, polymerization inhibitors, and leak detection substances, as well as the working medium and the refrigerating machine oil.

In the case of occurrence of dilution, pollution, or some other kind of change in the working medium of the present disclosure, such a tracer at a detectable concentration is preferably added so that such a change can be traced.

The number of the kinds of such tracers included in the working medium of the present disclosure may be only one, or may be two or more.

The tracer is not particularly limited, and can be selected from commonly used tracers if appropriate. A compound incapable of being an impurity unavoidably incorporated into the working medium of the present disclosure is preferably selected as the tracer.

Examples of such tracers include hydrofluorocarbons, hydrochlorofluorocarbons, chlorofluorocarbons, hydrochlorocarbons, fluorocarbons, deuterated hydrocarbons, deuterated hydrofluorocarbons, perfluorocarbons, fluoroethers, brominated compounds, iodinated compounds, alcohols, aldehydes, ketones, and nitrous oxides ($N_2O$). Especially, such a tracer is preferably at least one selected from the group consisting of hydrofluorocarbons, hydrochlorofluorocarbons, chlorofluorocarbons, hydrochlorocarbons, fluorocarbons, and fluoroethers.

Examples of such preferred tracers include the following compounds.

HC-40 (chloromethane, $CH_3Cl$)
HFC-161 (fluoroethane, $CH_3CH_2F$)
HFC-245fa (1,1,1,3,3-pentafluoropropane, $CF_3CH_2CHF_2$)
HFC-236fa (1,1,1,3,3,3-hexafluoropropane, $CF_3CH_2CF_3$)
HFC-236ea (1,1,1,2,3,3-hexafluoropropane, $CF_3CHFCHF_2$)
HCFC-22 (chlorodifluoromethane, $CHClF_2$)
HCFC-31 (chlorofluoromethane, $CH_2ClF$)
CFC-1113 (chlorotrifluoroethylene, $CF_2=CClF$)
HFE-125 (trifluoromethyl-difluoromethyl ether, $CF_3OCHF_2$)
HFE-134a (trifluoromethyl-fluoromethyl ether, $CF_3OCH_2F$)
HFE-143a (trifluoromethyl-methyl ether, $CF_3OCH_3$)
HFE-227ea (trifluoromethyl-tetrafluoroethyl ether, $CF_3OCHFCF_3$)
HFE-236fa (trifluoromethyl-trifluoroethyl ether, $CF_3OCH_2CF_3$)

The content of the tracer is preferably from 10 ppm to 1000 ppm, more preferably from 30 ppm to 500 ppm, still more preferably from 50 ppm to 300 ppm, particularly preferably from 75 ppm to 250 ppm, and most preferably from 100 ppm to 200 ppm with respect to the total amount of the working medium.

Such a stabilizer is a component that improves the stability of the working medium for a heat cycle against heat and oxidation. Examples of the stabilizer include conventionally known stabilizers, for example, oxidation resistance improvers, heat resistance improvers, and metal deactivators.

Examples of the oxidation resistance improvers and the heat resistance improvers include N,N'-diphenylphenylenediamine, p-octyldiphenylamine, p,p'-dioctyldiphenylamine, N-phenyl-1-naphthylamine, N-phenyl-2-naphthylamine, N-(p-dodecyl) phenyl-2-naphthylamine, di-1-naphthylamine, di-2-naphthylamine, N-alkylphenothiazine, 6-(t-butyl) phenol, 2,6-di-(t-butyl)phenol, 4-methyl-2,6-di-(t-butyl)phenol, and 4,4'-methylenebis(2,6-di-t-butylphenol). The number of the kinds of such oxidation resistance improvers or heat resistance improvers may be one, or may be two or more.

Examples of the metal deactivators include imidazole, benzimidazole, 2-mercaptobenzthiazol, 2,5-dimercaptothiadiazole, salicylidine-propylenediamine, pyrazole, benzotriazole, tolutriazole, 2-methylbenzimidazole, 3,5-dimethylpyrazole, methylenebis-benzotriazole, organic acids or esters thereof, primary, secondary, or tertiary aliphatic amines, amine salts of organic or inorganic acids, heterocyclic nitrogen-containing compounds, and amine salts of alkyl acid phosphates, or derivatives thereof.

It is acceptable that the content of the stabilizer is in a range in which the effects of the present disclosure are not considerably deteriorated. The content is typically from 0.01% by mass to 5% by mass, preferably from 0.05% by mass to 3% by mass, more preferably from 0.1% by mass to 2% by mass, still more preferably from 0.25% by mass to 1.5% by mass, and particularly preferably from 0.5% by mass to 1% by mass with respect to 100 parts by mass of the working medium.

The polymerization inhibitor is not particularly limited, and can be selected from commonly used polymerization inhibitors if appropriate. The number of the kinds of such polymerization inhibitors included in the working medium of the present disclosure may be only one, or may be two or more.

Examples of the polymerization inhibitors include 4-methoxy-1-naphthol, hydroquinone, hydroquinone methyl ether, dimethyl-tert-butylphenol, 2,6-di-tert-butyl-p-cresol, and benzotriazole.

The content of such a polymerization inhibitor is not particularly limited, and is typically from 0.01% by mass to 5% by mass, preferably from 0.05% by mass to 3% by mass, more preferably from 0.1% by mass to 2% by mass, still more preferably from 0.25% by mass to 1.5% by mass, and particularly preferably from 0.5% by mass to 1% by mass with respect to the total amount of the working medium.

Examples of the leak detection substances include ultraviolet fluorescence dyes, odorous gases, and odor masking agents.

Examples of the ultraviolet fluorescence dyes include conventionally known ultraviolet fluorescence dyes such as ultraviolet fluorescence dyes described in U.S. Patent No. 4249412, Japanese National-Phase Publication (JP-A) No. 10-502737, JP-A No. 2007-511645, JP-A No. 2008-500437, and JP-A No. 2008-531836.

Examples of the odor masking agents include conventionally known flavoring agents such as flavoring agents described in JP-A No. 2008-500437 and JP-A No. 2008-531836.

In the case of using such a leak detection substance, a solubilizing agent that improves the solubility of the leak detection substance in the working medium for a heat cycle may be used.

Examples of the solubilizing agent include solubilizing agents described in JP-A No. 2007-511645, JP-A No. 2008-500437, and JP-A No. 2008-531836.

It is acceptable that the content of the leak detection substance is in a range in which the effects of the present disclosure are not considerably deteriorated. The content is preferably 2 parts by mass or less, and more preferably 0.5 part by mass or less with respect to 100 parts by mass of the working medium.

The composition for a heat cycle system is used in a heat cycle system. The heat cycle system may be a heat pump system using heat obtained in a condenser, or may be a refrigeration cycle system using the cold obtained in an evaporator.

Specific examples of the heat cycle system include chilling and freezing equipment, air conditioners, electric power generation systems, heat transport apparatuses, and secondary cooling machines. Especially, the heat cycle system can stably and safely exert heat cycle performance even under an operation environment at a higher temperature, and is therefore preferably used as an air conditioner which is often placed in the outdoors or the like. It is also preferable to use the heat cycle system as a refrigerating/cold-storage instrument.

Specific examples of the air conditioners include home air-conditioners (residential air-conditioners, housing air-conditioners, and the like), industrial air-conditioners (packaged air-conditioners for stores, package air-conditioners for buildings, package air-conditioners for facilities, and the like), gas engine heat pumps, air conditioning apparatuses for trains, and air conditioning apparatuses for automobiles.

Such an air conditioning apparatus for an automobile is preferably an air conditioner for a gasoline-powered car, an air conditioner for a hybrid vehicle, an air conditioner for an electric vehicle, or an air conditioner for a hydrogen vehicle, and more preferably an air conditioner for an electric vehicle.

Specific examples of such chilling and freezing equipment include refrigerated display (cold-storage display cases, refrigerating display cases, and the like), cold-storage chambers, freezing chambers, drinking water coolers, refrigerating cold-storage units, refrigerating machines for cold-storage freezing warehouses, centrifugal refrigerating machine, screw refrigerating machines, vending machines, and ice-making machines.

Such an electric power generation systems is preferably a power generating system based on a Rankine cycle system. Specific examples of such a power generating system include a system in which a working medium is heated by geothermal energy, solar heat, waste heat in a middle-to-high temperature range of from around 50°C to 200°C, or the like in an evaporator, the working medium that has become vapor in a high-temperature/high-pressure state is adiabatically expanded in an expander, and a power generator is driven by work generated by the adiabatic expansion, to generate electricity.

Such a heat transport apparatus is preferably a latent heat transport apparatus. Examples of the latent heat transport apparatus include a heat pipe and two-phase closed type thermosiphon apparatus that perform latent heat transportation using the phenomenon of evaporation, boiling, condensation, or the like of the working medium enclosed in the apparatus. The heat pipe is applied to a comparatively small cooling apparatus such as an apparatus for cooling the heat generation portion of a semiconductor element or an electronic instrument. The two-phase closed type thermosiphon apparatus requires no wig and has a simple structure, and is therefore widely used in a gas-gas-type heat exchanger, the promotion of melting of snow on a road, the prevention of freeze, or the like.

[Method of Storing Working Medium for Heat Cycle]

A method of storing the working medium of the present disclosure includes a step of storing the working medium for a heat cycle, the working medium including HFO-1123, the low boiling point compound described above, and the high boiling point compounds described above. In the method, the low boiling point compound is at least one selected from the group consisting of carbon dioxide, R116, and R41, and the high boiling point compounds are at least two selected from the group consisting of HFC-32, HFO-1234yf, HFO-1234ze (E), HFO-1243zf, PFC-14, HFC-134, HFC-143a, HFC-227ea, cyclopropane, isobutene, isobutane, dimethyl ether, and ammonia.

The preferred aspects of HFO-1123, the low boiling point compound, and the high boiling point compounds, used in the method of storing the working medium of the present disclosure, are as described above.

[Method of Producing Working Medium for Heat Cycle]

A method of producing the working medium of the present disclosure includes a step of mixing HFO-1123, the low boiling point compound described above, and the high boiling point compounds described above. In the method, the low boiling point compound is at least one selected from the group consisting of carbon dioxide, R116, and R41, and the high boiling point compounds are at least two selected from the group consisting of HFC-32, HFO-1234yf, HFO-1234ze (E), HFO-1243zf, PFC-14, HFC-134, HFC-143a, HFC-227ea, cyclopropane, isobutene, isobutane, dimethyl ether, and ammonia.

The preferred aspects of HFO-1123, the low boiling point compound, and the high boiling point compounds, used in the method of producing the working medium of the present disclosure, are as described above.

The method of mixing HFO-1123, the low boiling point compound described above, and the high boiling point compounds described above is not particularly limited may be a method of simultaneously adding each component into a container, or may be a method of separately adding each component into a container.

[Storage Container for Working Medium for Heat Cycle]

A storage container for the working medium of the present disclosure is an airtight storage container in which the working medium for a heat cycle, including HFO-1123, the low boiling point compound described above, and the high boiling point compounds described above, is stored in a state in which a gas phase and a liquid phase coexist. In the container, the low boiling point compound is at least one selected from the group consisting of carbon dioxide, R116, and R41, and the high boiling point compounds are at least two selected from the group consisting of HFC-32, HFO-1234yf, HFO-1234ze (E), HFO-1243zf, PFC-14, HFC -134, HFC-143a, HFC-227ea, cyclopropane, isobutene, isobutane, dimethyl ether, and ammonia.

The storage container is not particularly limited as long as the storage container is a container in which a working medium can be stored in a state in which a gas phase and a liquid phase coexist under internal pressure.

The material of a surface, coming into contact with the working medium, of the storage container is preferably a resin material, a metal material, or a glass material. The storage container may be, for example, a container of which the whole includes a resin or a metal, a container that includes a multi-layer structure and an innermost layer including a resin or a metal, or a container including a coating film including a resin or a metal on a surface coming into contact with a working medium. The storage container may be a glass container, or may be a glass lining container.

Such a resin used in the container is preferably, for example, a resin including at least one selected from the group consisting of polyvinyl chloride resin (PVC), polyethylene resin (PE), polypropylene resin (PP), polystyrene resin (PS), acrylonitrile-butadiene-styrene resin (ABS), acrylonitrile-styrene resin (AS), polymethylmethacrylate resin (PMMA), polyvinyl alcohol resin (PVA), polyvinylidene chloride resin (PVDC), polyethylene terephthalate resin (PET), polyamide (nylon) resin (PA), polyacetal resin (POM), polycarbonate resin (PC), polyphenylene ether resin (PPE), polybutylene terephthalate resin (PBT), polyvinylidene fluoride resin (PVDF), perfluoroalkoxyalkane resin (PFA), polytetrafluoroethylene resin (PTFE), polysulfone resin (PSU), polyether sulfone resin (PES), polyphenylene sulfide resin (PPS), polyarylate resin (PAR), polyamide-imide resin (PAI), polyetherimide resin (PEI), polyether ether ketone resin (PEEK), polyimide resin (PI), phenol resin (PF), urea resin (UF), melamine resin (MF), unsaturated polyester resin (UP), epoxy resin (EP), silicon resin (SI), polyurethane resin (PUR), epoxy phenol resin, and phenol butyral resin.

Such a metal used in the container is preferably a metal selected from the metal groups consisting of iron, copper, aluminum, stainless steel, titanium, nickel, zinc, tin, brass, magnesium, chromium, lead, silver, tungsten, and tantalum; an alloy including at least one selected from the metal group described above; or a compound including at least one selected from the metal group described above.

Examples of the alloy include nickel-chromium plating, solder, and tin plating. Examples of the compound including a metal include alumite sulfate, zinc phosphate, and iron phosphate.

Examples of glass used in the container include soda ash glass, borosilicate glass, and quartz glass.

The storage container may include a container body and a surface with which the working medium comes into contact, the materials of the container body and the surface being different. Examples of such a material included in the container body include iron (steel), stainless steels, carbon steels, manganese steels, chromium-molybdenum steels, other low alloy steels, aluminum alloys, and glass. Examples of the stainless steels include SUS316, SUS304, and JFE443CT.

The shape and size of the storage container can be designed according to the purpose of the storage container. Examples of immobilized storage containers include storage tanks, transportable containers, and containers for transportation. Examples of the transportable containers include 1-L glass bottles, 20-L pail cans, 200-L drum cans, ton containers, aerosol cans, and high-pressure gas containers (non-refillable containers, welded containers, seamless containers, and the like). Examples of containers for transportation include tank lorries, ISO containers, and self-loaders.

Examples

The present disclosure is further specifically described below with reference to Examples. However, the present disclosure is not limited to Examples below without departing from the gist of the present disclosure.

[Examples 1-1 to 1-100, Examples 1A to example 1Z, And Example 1a]

In Examples 1-1 to 1-100, working media including HFO-1123, carbon dioxide, HFC-32, and HFO-1234yf were prepared so that the working media included compositions (% by mass) set forth in Tables 1 to 9.

In Examples 1A to 1Z, and Example 1a, working media including HFO-1123, HFC-32, and HFO-1234yf were prepared so that the working media included compositions (% by mass) set forth in Tables 1 to 9.

Each working medium was filled into an airtight container at 54.4°C and a filling rate of 15%, and evaluated in a gas-liquid equilibrium state at -40°C.

In Examples 1-1 to 1-100, the concentration of HFO-1123 at the time of filling was set at X% by mass, and the concentration of HFO-1123 in a gas phase after storage was set at Xv% by mass. The enrichment level (% by mass) of HFO-1123 was expressed as Xv - X. Each of Xv or X was based on the total content (100% by mass) of HFO-1123, carbon dioxide, HFC-32, and HFO-1234yf.

In Examples 1A to 1Z, and Example 1a, the concentration of HFO-1123 at the time of filling was set at x% by mass, and the concentration of HFO-1123 in a gas phase after storage was set at xv% by mass. The enrichment level (% by mass) of HFO-1123 is expressed as xv - x. Each of xv or x was based on the total content (100% by mass) of HFO-1123, HFC-32, and HFO-1234yf.

Working media of which the compositions except carbon dioxide were the same were compared with each other in the working media including carbon dioxide (quaternary system) and the working media including no carbon dioxide (ternary system), and the degree of a reduction in the enrichment level of HTO-1123 (hereinafter also referred to as "enrichment reduction degree") was calculated. For example, Examples 1-1 to 1-3 were compared with Example 1A.

The enrichment reduction degree was calculated based on the following Formula:

$$\text{Enrichment reduction degree (\%)} = [\{(xv - x) - (Xv - X)\}/(xv - x)] \times 100.$$

[Examples 2-1 to 2-100, Examples 2A to 2Z, And Example 2a]

In Examples 2-1 to 2-100, working media including HFO-1123, carbon dioxide, HFC-32, and HFO-1234ze (E) were prepared so that the working media included compositions (% by mass) set forth in Tables 10 to 18.

In Examples 2A to 2Z, and Example 2a, working media including HFO-1123, HFC-32, and HFO-1234ze (E) were prepared so that the working media included compositions (% by mass) set forth in Tables 10 to 18.

Each working medium was filled into an airtight container at 54.4°C and a filling rate of 15%, and evaluated in a gas-liquid equilibrium state at -40°C.

In Examples 2-1 to 2-100, the concentration of HFO-1123 at the time of filling was set at X% by mass, and the concentration of HFO-1123 in a gas phase after storage was set at Xv% by mass. The enrichment level (% by mass) of HFO-1123 was expressed as Xv - X. Each of Xv or X was based on the total content (100% by mass) of HFO-1123, carbon dioxide, HFC-32, and HFO-1234ze (E).

In Examples 2A to 2Z, and Example 2a, the concentration of HFO-1123 at the time of filling was set at x% by mass, and the concentration of HFO-1123 in a gas phase after storage was set at xv% by mass. The enrichment level (% by mass) of HFO-1123 is expressed as xv - x. Each of xv or x was based on the total content (100% by mass) of HFO-1123, HFC-32, and HFO-1234ze (E).

Working media of which the compositions except carbon dioxide were the same were compared in the working media including carbon dioxide (quaternary system) and the working media including no carbon dioxide (ternary system), and an enrichment reduction degree was calculated. For example, Examples 2-1 to 2-3 were compared with Example 2A. A method of calculating the enrichment reduction degree is as described above.

An enrichment reduction degree of less than 25% was evaluated as C, an enrichment reduction degree of from 25% to less than 45% was evaluated as B, and an enrichment reduction degree of 45% or more was evaluated as A.

GWP was calculated.

The evaluation results are set forth in Tables 1 to 18.

[Table 1]

| | Exa mple 1A | Exa mple 1-1 | Exa mple 1-2 | Exa mple 1-3 | Exa mple 1B | Exa mple 1-4 | Exa mple 1-5 | Exa mple 1-6 | Exa mple 1-7 | Exa mple 1C | Exa mple 1-8 | Exa mple 1-9 | Exa mple 1-10 | Exa mple 1-11 |
|---|---|---|---|---|---|---|---|---|---|---|---|---|---|---|
| HFO-1123 | 31.0 | 30.4 | 30.2 | 30.1 | 40.0 | 39.2 | 39.0 | 38.8 | 38.4 | 70.0 | 68.6 | 68.25 | 67.9 | 67.2 |
| $CO_2$ | - | 2.0 | 2.5 | 3.0 | - | 2.0 | 2.5 | 3.0 | 4.0 | - | 2.0 | 2.50 | 3.0 | 4.0 |
| HFC-32 | 6.0 | 5.9 | 5.9 | 5.8 | 6.0 | 5.9 | 5.85 | 5.8 | 5.8 | 6.0 | 5.9 | 5.85 | 5.8 | 5.8 |
| HFO-1234yf | 63.0 | 61.7 | 61.4 | 61.1 | 54.0 | 52.9 | 52.65 | 52.4 | 51.8 | 24.0 | 23.5 | 23.40 | 23.3 | 23.0 |
| GWP | 41 | 40 | 40 | 40 | 41 | 40 | 40 | 40 | 40 | 41 | 40 | 40 | 40 | 39 |
| Enrichment reduction degree | | 19.76 | 24.72 | 28.81 | | 20.31 | 25.13 | 29.78 | 38.99 | | 28.48 | 35.41 | 42.27 | 55.65 |
| Evaluation | | C | C | B | | C | B | B | B | | B | B | B | A |

[Table 2]

| | Example 1D | Example 1-12 | Example 1-13 | Example 1-14 | Example 1E | Example 1-15 | Example 1-16 | Example 1-17 | Example 1-18 | Example 1F | Example 1-19 | Example 1-20 | Example 1-21 | Example 1-22 |
|---|---|---|---|---|---|---|---|---|---|---|---|---|---|---|
| HFO-1123 | 31.0 | 30.4 | 30.2 | 30.0 7 | 40.0 | 39.2 | 39.0 | 38.8 | 38.4 | 60.0 | 58.8 | 58.5 | 58.2 | 57.6 |
| $CO_2$ | - | 2.0 | 2.5 | 3.0 | - | 2.0 | 2.5 | 3.0 | 4.0 | - | 2.0 | 2.5 | 3.0 | 4.0 |
| HFC-32 | 11.0 | 10.8 | 10.7 | 10.6 7 | 11.0 | 10.8 | 10.7 | 10.7 | 10.6 | 11.0 | 10.8 | 10.7 | 10.7 | 10.6 |
| HFO-1234yf | 58.0 | 56.8 | 56.6 | 56.2 6 | 49.0 | 48.0 | 47.8 | 47.5 | 47.0 | 29.0 | 28.4 | 28.3 | 28.1 | 27.8 |
| GWP | 75 | 74 | 73 | 73 | 75 | 73 | 73 | 73 | 72 | 75 | 73 | 73 | 73 | 72 |
| Enrichme nt reduction degree | | 19.3 9 | 24.1 9 | 28.5 8 | | 20.3 1 | 25.0 8 | 29.9 9 | 39.2 2 | | 25.1 8 | 31.2 0 | 37.4 1 | 49.2 6 |
| Evaluatio n | | C | C | B | | C | B | B | B | | B | B | B | A |

[Table 3]

|  | Example 1G | Example 1-23 | Example 1-24 | Example 1-25 | Example 1-26 | Example 1H | Example 1-27 | Example 1-28 | Example 1-29 | Example 1I | Example 1-30 | Example 1-31 | Example 1-32 | Example 1-33 |
|---|---|---|---|---|---|---|---|---|---|---|---|---|---|---|
| HFO-1123 | 70.0 | 68.6 | 68.3 | 67.9 | 67.2 | 31.0 | 30.4 | 30.2 | 30.1 | 40.0 | 39.2 | 39.0 | 38.8 | 38.4 |
| $CO_2$ | - | 2.0 | 2.5 | 3.0 | 4.0 | - | 2.0 | 2.5 | 3.0 | - | 2.0 | 2.5 | 3.0 | 4.0 |
| HFC-32 | 11.0 | 10.8 | 10.7 | 10.7 | 10.6 | 16.0 | 15.7 | 15.6 | 15.5 | 16.0 | 15.7 | 15.6 | 15.5 | 15.4 |
| HFO-1234yf | 19.0 | 18.6 | 18.5 | 18.4 | 18.2 | 53.0 | 51.9 | 51.7 | 51.4 | 44.0 | 43.1 | 42.9 | 42.7 | 42.2 |
| GWP | 75 | 73 | 73 | 72 | 72 | 109 | 107 | 106 | 106 | 109 | 107 | 106 | 106 | 104 |
| Enrichme nt reduction degree |  | 32.0 5 | 39.5 5 | 47.8 6 | 63.1 3 |  | 19.1 7 | 24.0 2 | 28.2 4 |  | 20.3 9 | 25.3 0 | 30.1 5 | 39.6 3 |
| Evaluatio n |  | B | B | A | A |  | C | C | B |  | C | B | B | B |

[Table 4]

| | Example 1J | Example 1-34 | Example 1-35 | Example 1-36 | Example 1-37 | Example 1K | Example 1-38 | Example 1-39 | Example 1-40 | Example 1-41 | Example 1L | Example 1-42 | Example 1-43 | Example 1-44 |
|---|---|---|---|---|---|---|---|---|---|---|---|---|---|---|
| HFO-1123 | 60.0 | 58.8 | 58.5 | 58.2 | 57.6 | 70.0 | 68.6 | 68.2 5 | 67.9 | 67.2 | 31.0 | 30.4 | 30.2 | 30.0 7 |
| $CO_2$ | - | 2.0 | 2.5 | 3.0 | 4.0 | - | 2.0 | 2.5 | 3.0 | 4.0 | - | 2.0 | 2.5 | 3.0 |
| HFC-32 | 16.0 | 15.7 | 15.6 | 15.5 | 15.4 | 16.0 | 15.7 | 15.6 0 | 15.5 | 15.4 | 21.5 | 21.1 | 21.0 | 20.8 6 |
| HFO-1234yf | 24.0 | 23.5 | 23.4 | 23.3 | 23.0 | 14.0 | 13.7 | 13.6 5 | 13.6 | 13.4 | 47.5 | 46.6 | 46.3 | 46.0 8 |
| GWP | 109 | 106 | 106 | 105 | 104 | 108 | 106 | 106 | 105 | 104 | 146 | 143 | 142 | 142 |
| Enrichme nt | | 26.8 7 | 33.4 1 | 39.8 0 | 52.6 6 | | 36.7 0 | 45.6 8 | 54.5 5 | 72.1 6 | | 19.2 4 | 24.1 0 | 28.5 1 |
| reduction degree | | | | | | | | | | | | | | |
| Evaluatio n | | B | B | B | A | | B | A | A | A | | C | C | B |

[Table 5]

| | Example 1M | Example 1-45 | Example 1-46 | Example 1-47 | Example 1-48 | Example 1N | Example 1-49 | Example 1-50 | Example 1-51 | Example 1-52 | Example 1O | Example 1-53 | Example 1-54 | Example 1-55 | Example 1-56 |
|---|---|---|---|---|---|---|---|---|---|---|---|---|---|---|---|
| HFO-1123 | 40.0 | 39.2 | 39.0 | 38.8 | 38.4 | 60.0 | 58.8 | 58.5 | 58.2 | 57.6 | 70.0 | 68.6 | 68.2 5 | 67.9 | 67.2 |
| $CO_2$ | - | 2.0 | 2.5 | 3.0 | 4.0 | - | 2.0 | 2.5 | 3.0 | 4.0 | - | 2.0 | 2.5 | 3.0 | 4.0 |
| HFC-32 | 21.5 | 21.1 | 21.0 | 20.9 | 20.6 | 21.5 | 21.1 | 21.0 | 20.9 | 20.6 | 21.5 | 21.1 | 20.9 6 | 20.9 | 20.6 |
| HFO-1234yf | 38.5 | 37.7 | 37.5 | 37.3 | 37.0 | 18.5 | 18.1 | 18.0 | 17.9 | 17.8 | 8.5 | 8.3 | 8.29 | 8.2 | 8.2 |
| GWP | 146 | 143 | 142 | 142 | 140 | 146 | 143 | 142 | 141 | 140 | 146 | 143 | 142 | 141 | 140 |
| Enrichm ent reductio n degree | | 20.7 1 | 25.7 5 | 30.7 2 | 40.1 5 | | 30.6 7 | 35.9 3 | 43.0 1 | 56.3 5 | | 43.2 7 | 53.6 5 | 64.3 3 | 84.2 1 |
| Evaluati on | | C | B | B | B | | B | B | B | A | | B | A | A | A |

[Table 6]

| | Example 1P | Example 1-57 | Example 1-58 | Example 1-59 | Example 1Q | Example 1-60 | Example 1-61 | Example 1-62 | Example 1-63 | Example 1R | Example 1-64 | Example 1-65 | Example 1-66 | Example 1-67 |
|---|---|---|---|---|---|---|---|---|---|---|---|---|---|---|
| HFO-1123 | 31.0 | 30.4 | 30.2 | 30.1 | 40.0 | 39.2 | 39.0 | 38.8 | 38.4 | 60.0 | 58.8 | 58.5 | 58.2 | 57.6 |
| $CO_2$ | - | 2.0 | 2.5 | 3.0 | - | 2.0 | 2.5 | 3.0 | 4.0 | - | 2.0 | 2.5 | 3.0 | 4.0 |
| HFC-32 | 29.0 | 28.4 | 28.3 | 28.1 | 29.0 | 28.4 | 28.3 | 28.1 | 27.8 | 29.0 | 28.4 | 28.3 | 28.1 | 27.8 |
| HFO-1234yf | 40.0 | 39.2 | 39.0 | 38.8 | 31.0 | 30.4 | 30.2 | 30.1 | 29.8 | 11.0 | 10.8 | 10.7 | 10.7 | 10.6 |
| GWP | 197 | 193 | 192 | 191 | 197 | 193 | 192 | 191 | 189 | 196 | 193 | 192 | 191 | 189 |
| Enrichme nt reduction degree | | 19.1 8 | 24.2 3 | 39.3 3 | | 20.9 9 | 26.1 7 | 31.2 1 | 40.9 2 | | 31.6 3 | 39.4 6 | 46.9 6 | 61.7 4 |
| Evaluatio n | | C | C | B | | C | B | B | B | | B | B | A | A |

[Table 7]

| | Example 1S | Example 1-68 | Example 1-69 | Example 1-70 | Example 1T | Example 1-71 | Example 1-72 | Example 1-73 | Example 1-74 | Example 1U | Example 1-75 | Example 1-76 | Example 1-77 | Example 1-78 |
|---|---|---|---|---|---|---|---|---|---|---|---|---|---|---|
| HFO-1123 | 31.0 | 30.4 | 30.2 | 30.1 | 40.0 | 39.2 | 39.0 | 38.8 | 38.4 | 50.0 | 49.0 | 48.7 5 | 48.5 | 48.0 |
| $CO_2$ | - | 2.0 | 2.5 | 3.0 | - | 2.0 | 2.5 | 3.0 | 4.0 | - | 2.0 | 2.50 | 3.0 | 4.0 |
| HFC-32 | 36.0 | 35.3 | 35.1 | 34.9 | 36.0 | 35.3 | 35.1 | 34.9 | 34.6 | 36.0 | 35.3 | 35.1 0 | 34.9 | 34.6 |
| HFO-1234yf | 33.0 | 32.3 | 32.2 | 32.0 | 24.0 | 23.5 | 23.4 | 23.3 | 23.0 | 14.0 | 13.7 | 13.6 5 | 13.6 | 13.4 |
| GWP | 244 | 239 | 238 | 237 | 244 | 239 | 238 | 237 | 234 | 244 | 239 | 238 | 237 | 234 |
| Enrichme nt reduction degree | | 19.2 6 | 24.3 0 | 28.4 6 | | 21.3 9 | 26.6 1 | 31.6 7 | 41.5 7 | | 25.3 5 | 31.4 5 | 37.4 6 | 49.2 9 |
| Evaluatio n | | C | C | B | | C | B | B | B | | B | B | B | A |

[Table 8]

| | Example 1V | Example 1-79 | Example 1-80 | Example 1-81 | Example 1W | Example 1-82 | Example 1-83 | Example 1-84 | Example 1-85 | Example 1X | Example 1-86 | Example 1-87 | Example 1-88 | Example 1-89 |
|---|---|---|---|---|---|---|---|---|---|---|---|---|---|---|
| HFO-1123 | 31.0 | 30.4 | 30.2 | 30.1 | 40.0 | 39.2 | 39.0 | 38.8 | 38.4 | 50.0 | 49.0 | 48.7 5 | 48.5 0 | 48.0 |
| $CO_2$ | - | 2.0 | 2.5 | 3.0 | - | 2.0 | 2.5 | 3.0 | 4.0 | - | 2.0 | 2.50 | 3.00 | 4.0 |
| HFC-32 | 40.0 | 39.2 | 39.0 | 38.8 | 40.0 | 39.2 | 39.0 | 38.8 | 38.4 | 40.0 | 39.2 | 39.0 0 | 38.8 0 | 38.4 |
| HFO-1234yf | 29.0 | 28.4 | 28.3 | 28.1 | 20.0 | 19.6 | 19.5 | 19.4 | 19.2 | 10.0 | 9.8 | 9.75 | 9.70 | 9.6 |
| GWP | 271 | 266 | 264 | 263 | 271 | 266 | 264 | 263 | 260 | 271 | 266 | 264 | 263 | 260 |
| Enrichme nt reduction degree | | 19.3 9 | 24.4 4 | 28.5 9 | | 21.5 3 | 25.0 2 | 31.8 4 | 41.7 5 | | 25.6 4 | 31.8 7 | 37.9 1 | 49.8 2 |
| Evaluatio n | | C | C | B | | C | B | B | B | | B | B | B | A |

[Table 9]

|  | Example 1Y | Example 1-90 | Example 1-91 | Example 1-92 | Example 1Z | Example 1-93 | Example 1-94 | Example 1-95 | Example 1-96 | Example 1a | Example 1-97 | Example 1-98 | Example 1-99 | Example 1-100 |
|---|---|---|---|---|---|---|---|---|---|---|---|---|---|---|
| HFO-1123 | 31.0 | 30.4 | 30.2 | 30.0 7 | 45.0 | 44.1 | 43.9 | 43.6 5 | 43.2 | 50.0 | 49.0 | 48.7 5 | 48.5 0 | 48.0 0 |
| $CO_2$ | - | 2.0 | 2.5 | 3.0 | - | 2.0 | 2.5 | 3.00 | 4.0 | - | 2.0 | 2.50 | 3.00 | 4.00 |
| HFC-32 | 44.0 | 43.1 | 42.9 | 42.6 8 | 44.0 | 43.1 | 42.9 | 42.6 8 | 42.2 | 44.0 | 43.1 | 42.9 0 | 42.6 8 | 42.2 4 |
| HFO-1234yf | 25.0 | 24.5 | 24.4 | 24.2 5 | 11.0 | 10.8 | 10.7 | 10.6 7 | 10.6 | 6.0 | 5.9 | 5.85 | 5.82 | 5.76 |
| GWP | 298 | 292 | 291 | 289 | 298 | 292 | 291 | 289 | 286 | 298 | 292 | 291 | 289 | 286 |
| Enrichme nt reduction degree |  | 19.4 1 | 24.4 5 | 28.8 9 |  | 23.4 0 | 28.9 3 | 34.6 3 | 45.3 5 |  | 25.8 7 | 32.1 7 | 38.2 9 | 50.1 4 |
| Evaluatio n |  | C | C | B |  | C | B | B | A |  | B | B | B | A |

[Table 10]

| | Example 2A | Example 2-1 | Example 2-2 | Example 2-3 | Example 2B | Example 2-4 | Example 2-5 | Example 2-6 | Example 2-7 | Example 2C | Example 2-8 | Example 2-9 | Example 2-10 | Example 2-11 |
|---|---|---|---|---|---|---|---|---|---|---|---|---|---|---|
| HFO-1123 | 31.0 | 30.4 | 30.2 | 30.1 | 40.0 | 39.2 | 39.0 0 | 38.8 | 38.4 | 70.0 | 68.6 | 68.2 5 | 67.9 | 67.2 |
| $CO_2$ | - | 2.0 | 2.5 | 3.0 | - | 2.0 | 2.50 | 3.0 | 4.0 | - | 2.0 | 2.50 | 3.0 | 4.0 |
| HFC-32 | 6.0 | 5.9 | 5.9 | 5.8 | 6.0 | 5.9 | 5.85 | 5.8 | 5.8 | 6.0 | 5.9 | 5.85 | 5.8 | 5.8 |
| HFO-1234ze(E) | 63.0 | 61.7 | 61.4 | 61.1 | 54.0 | 52.9 | 52.6 5 | 52.4 | 51.8 | 24.0 | 23.5 | 23.4 0 | 23.3 | 23.0 |
| GWP | 41.3 | 40.4 | 40.2 | 40.0 | 41.2 | 40.4 | 40.2 | 40.0 | 39.6 | 40.9 | 40.1 | 39.9 | 39.7 | 39.3 |
| Enrichme nt reduction degree | | 18.3 1 | 22.6 7 | 26.3 7 | | 18.3 5 | 22.5 3 | 26.6 2 | 34.5 4 | | 24.8 8 | 30.7 3 | 36.4 6 | 48.0 9 |
| Evaluation | | C | C | B | | C | C | B | B | | C | B | B | A |

[Table 11]

| | Example 2D | Example 2-12 | Example 2-13 | Example 2-14 | Example 2E | Example 2-15 | Example 2-16 | Example 2-17 | Example 2-18 | Example 2F | Example 2-19 | Example 2-20 | Example 2-21 | Example 2-22 |
|---|---|---|---|---|---|---|---|---|---|---|---|---|---|---|
| HFO-1123 | 31.0 | 30.4 | 30.2 | 30.0 7 | 40.0 | 39.2 | 39.0 | 38.8 | 38.4 | 60.0 | 58.8 | 58.5 | 58.2 | 57.6 |
| $CO_2$ | - | 2.0 | 2.5 | 3.0 | - | 2.0 | 2.5 | 3.0 | 4.0 | - | 2.0 | 2.5 | 3.0 | 4.0 |
| HFC-32 | 11.0 | 10.8 | 10.7 | 10.6 7 | 11.0 | 10.8 | 10.7 | 10.7 | 10.6 | 11.0 | 10.8 | 10.7 | 10.7 | 10.6 |
| HFO-1234ze(E) | 58.0 | 56.8 | 56.6 | 56.2 6 | 49.0 | 48.0 | 47.8 | 47.5 | 47.0 | 29.0 | 28.4 | 28.3 | 28.1 | 27.8 |
| GWP | 75.1 | 73.6 | 73.2 | 72.8 | 75.0 | 73.5 | 73.1 | 72.7 | 72.0 | 74.8 | 73.3 | 72.9 | 72.6 | 71.8 |
| Enrichme nt reduction degree | | 17.7 1 | 21.8 6 | 25.7 9 | | 18.1 5 | 22.2 8 | 26.5 1 | 34.3 9 | | 21.9 0 | 27.0 1 | 32.3 3 | 42.2 3 |
| Evaluation | | C | C | B | | C | C | B | B | | C | B | B | B |

[Table 12]

| | Example 2G | Example 2-23 | Example 2-24 | Example 2-25 | Example 2-26 | Example 2H | Example 2-27 | Example 2-28 | Example 2-29 | Example 21 | Example 2-30 | Example 2-31 | Example 2-32 | Example 2-33 |
|---|---|---|---|---|---|---|---|---|---|---|---|---|---|---|
| HFO-1123 | 70.0 | 68.6 | 68.3 | 67.9 | 67.2 | 31.0 | 30.4 | 30.2 | 30.1 | 40.0 | 39.2 | 39.0 | 38.8 | 38.4 |
| $CO_2$ | - | 2.0 | 2.5 | 3.0 | 4.0 | - | 2.0 | 2.5 | 3.0 | - | 2.0 | 2.5 | 3.0 | 4.0 |
| HFC-32 | 11.0 | 10.8 | 10.7 | 10.7 | 10.6 | 16.0 | 15.7 | 15.6 | 15.5 | 16.0 | 15.7 | 15.6 | 15.5 | 15.4 |
| HFO-1234ze(E) | 19.0 | 18.6 | 18.5 | 18.4 | 18.2 | 53.0 | 51.9 | 51.7 | 51.4 | 44.0 | 43.1 | 42.9 | 42.7 | 42.2 |
| GWP | 74.7 | 73.2 | 72.8 | 72.5 | 71.7 | 108.9 | 106.7 | 106.2 | 105.6 | 108.8 | 106.6 | 106.1 | 105.5 | 104.5 |
| Enrichment reduction degree | | 27.87 | 34.20 | 41.21 | 54.02 | | 17.42 | 21.63 | 25.31 | | 18.16 | 22.38 | 26.52 | 34.59 |
| Evaluation | | B | B | B | A | | C | C | B | | C | C | B | B |

[Table 13]

| | Example 2J | Example 2-34 | Example 2-35 | Example 2-36 | Example 2-37 | Example 2K | Example 2-38 | Example 2-39 | Example 2-40 | Example 2-41 | Example 2L | Example 2-42 | Example 2-43 | Example 2-44 |
|---|---|---|---|---|---|---|---|---|---|---|---|---|---|---|
| HFO-1123 | 60.0 | 58.8 | 58.5 | 58.2 | 57.6 | 70.0 | 68.6 | 68.2 5 | 67.9 | 67.2 | 31.0 | 30.3 8 | 30.2 | 30.0 7 |
| $CO_2$ | - | 2.0 | 2.5 | 3.0 | 4.0 | - | 2.0 | 2.50 | 3.0 | 4.0 | - | 2.0 | 2.5 | 3.0 |
| HFC-32 | 16.0 | 15.7 | 15.6 | 15.5 | 15.4 | 16.0 | 15.7 | 15.6 0 | 15.5 | 15.4 | 21.5 | 21.0 7 | 21.0 | 20.8 6 |
| HFO-1234ze(E) | 24.0 | 23.5 | 23.4 | 23.3 | 23.0 | 14.0 | 13.7 | 13.6 5 | 13.6 | 13.4 | 47.5 | 46.5 5 | 46.3 | 46.0 8 |
| GWP | 108. 6 | 106. 4 | 105. 9 | 105. 3 | 104. 3 | 108. 5 | 106. 3 | 105. 8 | 105. 2 | 104. 2 | 146. 0 | 143. 1 | 142. 4 | 141. 7 |
| Enrichme nt reduction degree | | 23.3 6 | 28.8 7 | 34.3 1 | 45.1 5 | | 31.9 8 | 39.6 0 | 47.1 1 | 62.3 3 | | 17.4 4 | 21.6 8 | 25.4 8 |
| Evaluation | | C | B | B | A | | B | B | A | A | | C | C | B |

[Table 14]

| | Example 2M | Example 2-45 | Example 2-46 | Example 2-47 | Example 2-48 | Example 2N | Example 2-49 | Example 2-50 | Example 2-51 | Example 2-52 | Example 2O | Example 2-53 | Example 2-54 | Example 2-55 | Example 2-56 |
|---|---|---|---|---|---|---|---|---|---|---|---|---|---|---|---|
| HFO-1123 | 40.0 | 39.2 | 39.0 | 38.8 | 38.4 | 60.0 | 58.8 | 58.5 | 58.2 | 57.6 | 70.0 | 68.6 | 68.25 | 67.9 | 67.2 |
| $CO_2$ | - | 2.0 | 2.5 | 3.0 | 4.0 | - | 2.0 | 2.5 | 3.0 | 4.0 | - | 2.0 | 2.50 | 3.0 | 4.0 |
| HFC-32 | 21.5 | 21.1 | 21.0 | 20.9 | 20.6 | 21.5 | 21.1 | 21.0 | 20.9 | 20.6 | 21.5 | 21.1 | 20.96 | 20.9 | 20.6 |
| HFO-1234-ze(E) | 38.5 | 37.7 | 37.5 | 37.3 | 37.0 | 18.5 | 18.1 | 18.0 | 17.9 | 17.8 | 8.5 | 8.3 | 8.29 | 8.2 | 8.2 |
| GWP | 145.9 | 143.0 | 142.3 | 141.6 | 140.1 | 145.7 | 142.8 | 142.1 | 141.4 | 140.0 | 145.6 | 142.8 | 142.0 | 141.3 | 139.9 |
| Enrichment reduction degree | | 18.40 | 22.78 | 27.01 | 34.98 | | 25.32 | 31.44 | 37.41 | 48.83 | | 38.53 | 979.51 | 975.00 | 965.98 |
| Evaluation | | C | C | B | B | | B | B | B | A | | B | A | A | A |

[Table 15]

| | Example 2P | Example 2-57 | Example 2-58 | Example 2-59 | Example 2Q | Example 2-60 | Example 2-61 | Example 2-62 | Example 2-63 | Example 2R | Example 2-64 | Example 2-65 | Example 2-66 | Example 2-67 |
|---|---|---|---|---|---|---|---|---|---|---|---|---|---|---|
| HFO-1123 | 31.0 | 30.4 | 30.2 | 30.1 | 40.0 | 39.2 | 39.0 | 38.8 | 38.4 | 60.0 | 58.8 | 58.5 | 58.2 | 57.6 |
| $CO_2$ | - | 2.0 | 2.5 | 3.0 | - | 2.0 | 2.5 | 3.0 | 4.0 | - | 2.0 | 2.5 | 3.0 | 4.0 |
| HFC-32 | 29.0 | 28.4 | 28.3 | 28.1 | 29.0 | 28.4 | 28.3 | 28.1 | 27.8 | 29.0 | 28.4 | 28.3 | 28.1 | 27.8 |
| HFO-1234ze(E) | 40.0 | 39.2 | 39.0 | 38.8 | 31.0 | 30.4 | 30.2 | 30.1 | 29.8 | 11.0 | 10.8 | 10.7 | 10.7 | 10.6 |
| GWP | 196. 7 | 192. 8 | 191. 8 | 190. 9 | 196. 6 | 192. 7 | 191. 8 | 190. 8 | 188. 8 | 196. 4 | 192. 5 | 191. 6 | 190. 6 | 188. 6 |
| Enrichme nt reduction degree | | 17.4 5 | 21.8 3 | 25.4 9 | | 18.8 2 | 23.3 3 | 27.6 2 | 36.0 2 | | 28.5 4 | 35.5 4 | 42.1 5 | 55.3 6 |
| Evaluation | | C | C | B | | C | C | B | B | | B | B | B | A |

EP 4 610 323 A1

[Table 16]

| | Example 2S | Example 2-68 | Example 2-69 | Example 2-70 | Example 2T | Example 2-71 | Example 2-72 | Example 2-73 | Example 2-74 | Example 2U | Example 2-75 | Example 2-76 | Example 2-77 | Example 2-78 |
|---|---|---|---|---|---|---|---|---|---|---|---|---|---|---|
| HFO-1123 | 31.0 | 30.4 | 30.2 | 30.1 | 40.0 | 39.2 | 39.0 | 38.8 | 38.4 | 50.0 | 49.0 | 48.7 5 | 48.5 | 48.0 |
| $CO_2$ | | 2.0 | 2.5 | 3.0 | | 2.0 | 2.5 | 3.0 | 4.0 | | 2.0 | 2.50 | 3.0 | 4.0 |
| HFC-32 | 36.0 | 35.3 | 35.1 | 34.9 | 36.0 | 35.3 | 35.1 | 34.9 | 34.6 | 36.0 | 35.3 | 35.1 0 | 34.9 | 34.6 |
| HFO-1234ze(E) | 33.0 | 32.3 | 32.2 | 32.0 | 24.0 | 23.5 | 23.4 | 23.3 | 23.0 | 14.0 | 13.7 | 13.6 5 | 13.6 | 13.4 |
| GWP | 244. 1 | 239. 2 | 238. 0 | 236. 8 | 244. 0 | 239. 1 | 237. 9 | 236. 7 | 234. 2 | 243. 9 | 239. 0 | 237. 8 | 236. 6 | 234. 1 |
| Enrichme nt | | 17.6 8 | 22.0 7 | 25.8 3 | | 19.4 9 | 24.0 3 | 28.5 2 | 37.3 0 | | 23.1 6 | 28.6 6 | 34.0 8 | 44.6 9 |
| reduction degree | | | | | | | | | | | | | | |
| Evaluation | | C | C | B | | C | C | B | B | | C | B | B | B |

[Table 17]

| | Example 2V | Example 2-79 | Example 2-80 | Example 2-81 | Example 2W | Example 2-82 | Example 2-83 | Example 2-84 | Example 2-85 | Example 2X | Example 2-86 | Example 2-87 | Example 2-88 | Example 2-89 |
|---|---|---|---|---|---|---|---|---|---|---|---|---|---|---|
| HFO-1123 | 31.0 | 30.4 | 30.2 | 30.1 | 40.0 | 39.2 | 39.0 | 38.8 | 38.4 | 50.0 | 49.0 | 48.75 | 48.50 | 48.0 |
| $CO_2$ | | 2.0 | 2.5 | 3.0 | | 2.0 | 2.5 | 3.0 | 4.0 | | 2.0 | 2.50 | 3.00 | 4.0 |
| HFC-32 | 40.0 | 39.2 | 39.0 | 38.8 | 40.0 | 39.2 | 39.0 | 38.8 | 38.4 | 40.0 | 39.2 | 39.00 | 38.80 | 38.4 |
| HFO-1234ze(E) | 29.0 | 28.4 | 28.3 | 28.1 | 20.0 | 19.6 | 19.5 | 19.4 | 19.2 | 10.0 | 9.8 | 9.75 | 9.70 | 9.6 |
| GWP | 271.1 | 265.7 | 264.3 | 263.0 | 271.0 | 265.6 | 264.3 | 262.9 | 260.2 | 270.9 | 265.5 | 264.2 | 262.8 | 260.1 |
| Enrichment reduction degree | | 17.88 | 22.37 | 26.13 | | 19.75 | 24.49 | 29.03 | 37.92 | | 23.94 | 29.68 | 35.33 | 46.13 |
| Evaluation | | C | C | B | | C | C | B | B | | C | B | B | |

[Table 18]

| | Example 2X | Example 2-90 | Example 2-91 | Example 2-92 | Example 2Z | Example 2-93 | Example 2-94 | Example 2-95 | Example 2-96 | Example 2a | Example 2-97 | Example 2-98 | Example 2-99 | Example 2-100 |
|---|---|---|---|---|---|---|---|---|---|---|---|---|---|---|
| HFO-1123 | 31.0 | 30.4 | 30.2 | 30.0 7 | 40.0 | 39.2 | 39.0 | 38.8 0 | 38.4 | 50.0 | 49.0 | 48.7 5 | 48.5 0 | 48.0 0 |
| $CO_2$ | | 2.0 | 2.5 | 3.0 | | 2.0 | 2.5 | 3.00 | 4.0 | | 2.0 | 2.50 | 3.00 | 4.00 |
| HFC-32 | 44.0 | 43.1 | 42.9 | 42.6 8 | 44.0 | 43.1 | 42.9 | 42.6 8 | 42.2 | 44.0 | 43.1 | 42.9 0 | 42.6 8 | 42.2 4 |
| HFO-1234ze(E) | 25.0 | 24.5 | 24.4 | 24.2 5 | 16.0 | 15.7 | 15.6 | 15.5 2 | 15.4 | 6.0 | 5.9 | 5.85 | 5.82 | 5.76 |
| GWP | 298. 1 | 292. 2 | 290. 7 | 289. 2 | 298. 0 | 292. 1 | 290. 6 | 289. 1 | 286. 2 | 297. 9 | 292. 0 | 290. 5 | 289. 0 | 286. 1 |
| Enrichme nt reduction degree | | 17.9 9 | 22.5 5 | 26.5 4 | | 20.1 2 | 24.9 7 | 29.6 0 | 38.5 9 | | 24.7 3 | 30.6 7 | 36.5 2 | 47.7 8 |
| Evaluation | | C | C | B | | C | C | B | B | | C | B | B | A |

It was found that the enrichment of HFO-1123 in a gas phase was able to be suppressed in Examples 1-1 to 1-100, and Examples 2-1 to 2-100, as set forth in Tables 1 to 18.

[Examples 3-1 to 3-78]

In Examples 3-1 to 3-78, for working media including HFO-1123, carbon dioxide, HFC-32, and HFO-1234yf as compositions (% by mass) set forth in Tables 19 to 21, temperature glides in an evaporator (referred to as "TG" in the tables; unit was "°C"), condensing pressures (referred to as "Pc" in the tables), compression ratios (referred to as "Pc/Pe" in the tables), CAP, and COP were determined by carrying out refrigeration cycle theoretical calculation under the conditions described above. In Tables 19 to 21, "A" is set forth in the case of satisfying Formula (1), and "B" is set forth in the case of not satisfying Formula (1).

Enrichment reduction degrees were calculated by a method similar to that in Example 1-1. An enrichment reduction degree of less than 25% was evaluated as C, an enrichment reduction degree of from 25% to less than 45% was evaluated as B, and an enrichment reduction degree of 45% or more was evaluated as A.

GWP was calculated.

The measurement results and the evaluation results are set forth in Tables 19 to 21.

[Table 19]

| | HFO-11-23 | CO2 | HFC-32 | HFO-123-4yf | GWP | TG | Pc | Pc/Pe | CAP | COP | Formula (1) | Enrichment reduction degree | Evaluation |
|---|---|---|---|---|---|---|---|---|---|---|---|---|---|
| Example 3-1 | 60 | 2.7 | 3 | 34.3 | 21 | 7.7 | 0.949 | 0.990 | 0.920 | 0.977 | B | 31.45 | B |
| Example 3-2 | 60 | 2.7 | 5 | 32.3 | 34 | 7.4 | 0.973 | 0.987 | 0.942 | 0.974 | B | 32.40 | B |
| Example 3-3 | 80 | 2.7 | 5 | 12.3 | 34 | 4.0 | 1.154 | 0.953 | 1.083 | 0.946 | A | 59.13 | A |
| Example 3-4 | 85 | 2.7 | 5 | 7.3 | 34 | 2.7 | 1.203 | 0.943 | 1.121 | 0.939 | A | 89.75 | A |
| Example 3-5 | 40 | 2.7 | 44 | 13.3 | 298 | 2.8 | 1.133 | 0.970 | 1.133 | 0.977 | A | 29.35 | B |
| Example 3-6 | 50 | 2.7 | 44 | 3.3 | 298 | 1.7 | 1.209 | 0.959 | 1.200 | 0.969 | A | 35.91 | B |
| Example 3-7 | 54 | 3 | 11 | 32 | 75 | 7.1 | 0.997 | 0.986 | 0.969 | 0.974 | B | 35.08 | B |
| Example 3-8 | 60 | 3 | 11 | 26 | 75 | 6.3 | 1.047 | 0.977 | 1.010 | 0.967 | A | 39.06 | B |
| Example 3-9 | 38 | 3 | 21.5 | 37.5 | 146 | 6.8 | 0.971 | 0.993 | 0.959 | 0.983 | A | 30.44 | B |
| Example 3-10 | 40 | 3 | 21.5 | 35.5 | 146 | 6.6 | 0.986 | 0.990 | 0.972 | 0.981 | A | 30.89 | B |

(continued)

| | HF-O-11-23 | CO2 | HFC-32 | HF-O-123-4yf | GWP | TG | Pc | Pc/Pe | CAP | COP | Formula (1) | Enrichment reduction degree | Evaluation |
|---|---|---|---|---|---|---|---|---|---|---|---|---|---|
| Example 3-11 | 45 | 3 | 21.5 | 30.5 | 146 | 6.1 | 1.025 | 0.984 | 1.005 | 0.976 | A | 33.03 | B |
| Example 3-12 | 50 | 3 | 21.5 | 25.5 | 146 | 5.5 | 1.064 | 0.977 | 1.039 | 0.970 | A | 35.61 | B |
| Example 3-13 | 55 | 3 | 21.5 | 20.5 | 146 | 4.7 | 1.105 | 0.970 | 1.073 | 0.965 | A | 39.71 | B |
| Example 3-14 | 60 | 3 | 21.5 | 15.5 | 146 | 3.9 | 1.147 | 0.963 | 1.108 | 0.960 | A | 45.73 | A |
| Example 3-15 | 30 | 3 | 29 | 38 | 197 | 6.1 | 0.971 | 0.994 | 0.968 | 0.987 | A | 28.48 | B |
| Example 3-16 | 40 | 3 | 29 | 28 | 197 | 5.2 | 1.046 | 0.982 | 1.033 | 0.978 | A | 31.63 | B |
| Example 3-17 | 50 | 3 | 29 | 18 | 197 | 4.0 | 1.124 | 0.969 | 1.101 | 0.968 | A | 37.48 | B |
| Example 3-18 | 30 | 3 | 36 | 31 | 244 | 4.9 | 1.020 | 0.987 | 1.020 | 0.985 | A | 28.63 | B |
| Example 3-19 | 40 | 3 | 36 | 21 | 244 | 4.0 | 1.094 | 0.975 | 1.086 | 0.976 | A | 32.24 | B |
| Example 3-20 | 50 | 3 | 36 | 11 | 244 | 2.8 | 1.171 | 0.963 | 1.153 | 0.968 | A | 38.92 | B |
| Example 3-21 | 30 | 3 | 44 | 23 | 298 | 3.8 | 1.067 | 0.981 | 1.075 | 0.985 | A | 28.67 | B |
| Example 3-22 | 40 | 3 | 44 | 13 | 298 | 2.9 | 1.140 | 0.970 | 1.140 | 0.976 | A | 32.41 | B |
| Example 3-23 | 45 | 3.5 | 21.5 | 30 | 146 | 6.2 | 1.038 | 0.983 | 1.017 | 0.974 | A | 38.35 | B |
| Example 3-24 | 50 | 3.5 | 21.5 | 25 | 146 | 5.6 | 1.077 | 0.976 | 1.050 | 0.969 | A | 41.68 | B |
| Example 3-25 | 55 | 3.5 | 21.5 | 20 | 146 | 4.8 | 1.118 | 0.969 | 1.085 | 0.964 | A | 46.43 | A |

(continued)

| | HF-O-11-23 | CO2 | HFC-32 | HF-O-123-4yf | GWP | TG | Pc | Pc/P e | CAP | CO P | Formula (1) | Enrichment reduction degree | Evaluation |
|---|---|---|---|---|---|---|---|---|---|---|---|---|---|
| Example 3-26 | 60 | 3.5 | 21.5 | 15 | 146 | 4.0 | 1.16 1 | 0.96 2 | 1.119 | 0.95 8 | A | 53.73 | A |

[Table 20]

| | HF-O-11-23 | CO2 | HFC-32 | HF-O-123-4yf | GWP | TG | Pc | Pc/P e | CAP | CO P | Formula (1) | Enrichment reduction degree | Evaluation |
|---|---|---|---|---|---|---|---|---|---|---|---|---|---|
| Example 3-27 | 55 | 4 | 11 | 30 | 75 | 7.3 | 1.03 3 | 0.98 3 | 1.000 | 0.96 9 | B | 47.11 | A |
| Example 3-28 | 60 | 4 | 11 | 25 | 75 | 6.6 | 1.07 5 | 0.97 5 | 1.035 | 0.96 3 | A | 51.86 | A |
| Example 3-29 | 42 | 4 | 21.5 | 32.5 | 146 | 6.7 | 1.02 7 | 0.98 7 | 1.009 | 0.97 6 | A | 42.11 | B |
| Example 3-30 | 45 | 4 | 21.5 | 29.5 | 146 | 6.4 | 1.05 1 | 0.98 3 | 1.028 | 0.97 3 | A | 43.83 | B |
| Example 3-31 | 50 | 4 | 21.5 | 24.5 | 146 | 5.7 | 1.09 1 | 0.97 5 | 1.062 | 0.96 7 | A | 47.65 | A |
| Example 3-32 | 55 | 4 | 21.5 | 19.5 | 146 | 4.9 | 1.13 2 | 0.96 8 | 1.096 | 0.96 2 | A | 53.20 | A |
| Example 3-33 | 60 | 4 | 21.5 | 14.5 | 146 | 4.1 | 1.17 4 | 0.96 0 | 1.131 | 0.95 7 | A | 61.77 | A |
| Example 3-34 | 30 | 4 | 29 | 37 | 197 | 6.5 | 0.99 7 | 0.99 3 | 0.991 | 0.98 4 | A | 37.82 | B |
| Example 3-35 | 40 | 4 | 29 | 27 | 197 | 5.5 | 1.07 1 | 0.98 1 | 1.056 | 0.97 5 | A | 42.12 | B |
| Example 3-36 | 50 | 4 | 29 | 17 | 197 | 4.2 | 1.15 0 | 0.96 7 | 1.124 | 0.96 5 | A | 50.24 | A |
| Example 3-37 | 30 | 4 | 36 | 30 | 244 | 5.2 | 1.04 4 | 0.98 6 | 1.043 | 0.98 2 | A | 37.75 | B |
| Example 3-38 | 40 | 4 | 36 | 20 | 244 | 4.2 | 1.11 9 | 0.97 5 | 1.109 | 0.97 4 | A | 42.77 | B |

(continued)

| | HF-O-11-23 | CO2 | HFC-32 | HF-O-123-4yf | GWP | TG | Pc | Pc/P e | CAP | CO P | Formula (1) | Enrichment reduction degree | Evaluation |
|---|---|---|---|---|---|---|---|---|---|---|---|---|---|
| Example 3-39 | 50 | 4 | 36 | 10 | 244 | 3.0 | 1.19 7 | 0.96 1 | 1.176 | 0.96 5 | A | 51.97 | A |
| Example 3-40 | 30 | 4 | 44 | 22 | 298 | 4.1 | 1.09 2 | 0.98 1 | 1.097 | 0.98 2 | A | 37.98 | B |
| Example 3-41 | 40 | 4 | 44 | 12 | 298 | 3.1 | 1.16 5 | 0.96 9 | 1.162 | 0.97 4 | A | 43.03 | B |
| Example 3-42 | 45 | 4 | 44 | 7 | 298 | 1.9 | 1.24 1 | 0.95 8 | 1.229 | 0.96 5 | A | 47.07 | A |
| Example 3-43 | 45 | 4.5 | 21.5 | 29 | 146 | 6.5 | 1.06 4 | 0.98 2 | 1.040 | 0.97 1 | A | 49.02 | A |
| Example 3-44 | 50 | 4.5 | 21.5 | 24 | 146 | 5.8 | 1.10 4 | 0.97 5 | 1.074 | 0.96 6 | A | 53.65 | A |
| Example 3-45 | 55 | 4.5 | 21.5 | 19 | 146 | 5.0 | 1.14 5 | 0.96 8 | 1.108 | 0.96 1 | A | 60.01 | A |
| Example 3-46 | 60 | 4.5 | 21.5 | 14 | 146 | 4.2 | 1.18 8 | 0.96 0 | 1.143 | 0.95 5 | A | 69.82 | A |
| Example 3-47 | 55 | 5 | 11 | 29 | 75 | 7.6 | 1.06 1 | 0.98 2 | 1.025 | 0.96 6 | B | 58.69 | A |
| Example 3-48 | 60 | 5 | 11 | 24 | 75 | 6.8 | 1.10 3 | 0.97 3 | 1.059 | 0.96 0 | A | 64.97 | A |
| Example 3-49 | 45 | 5 | 21.5 | 28.5 | 146 | 6.7 | 1.07 7 | 0.98 2 | 1.052 | 0.97 0 | A | 54.40 | A |
| Example 3-50 | 50 | 5 | 21.5 | 23.5 | 146 | 5.9 | 1.11 7 | 0.97 4 | 1.086 | 0.96 4 | A | 59.34 | A |
| Example 3-51 | 55 | 5 | 21.5 | 18.5 | 146 | 5.1 | 1.15 9 | 0.96 7 | 1.120 | 0.95 9 | A | 66.62 | A |
| Example 3-52 | 60 | 5 | 21.5 | 13.5 | 146 | 4.2 | 1.20 1 | 0.95 9 | 1.155 | 0.95 4 | A | 78.16 | A |
| Example 3-53 | 30 | 5 | 29 | 36 | 197 | 6.8 | 1.02 2 | 0.99 2 | 1.014 | 0.98 1 | A | 46.27 | A |

(continued)

|  | HF-O-11-23 | CO2 | HFC-32 | HF-O-123-4yf | GWP | TG | Pc | Pc/Pe | CAP | COP | Formula (1) | Enrichment reduction degree | Evaluation |
|---|---|---|---|---|---|---|---|---|---|---|---|---|---|
| Example 3-54 | 40 | 5 | 29 | 26 | 197 | 5.7 | 1.09 7 | 0.97 9 | 1.080 | 0.97 2 | A | 51.89 | A |
| Example 3-55 | 50 | 5 | 29 | 16 | 197 | 4.4 | 1.17 6 | 0.96 6 | 1.147 | 0.96 2 | A | 62.55 | A |
| Example 3-56 | 30 | 5 | 36 | 29 | 244 | 5.5 | 1.06 9 | 0.98 5 | 1.066 | 0.97 9 | A | 46.41 | A |
| Example 3-57 | 40 | 5 | 36 | 19 | 244 | 4.5 | 1.14 4 | 0.97 4 | 1.131 | 0.97 1 | A | 52.56 | A |
| Example 3-58 | 50 | 5 | 36 | 9 | 244 | 3.1 | 1.22 2 | 0.96 0 | 1.198 | 0.96 2 | A | 64.67 | A |
| Example 3-59 | 30 | 5 | 44 | 21 | 298 | 4.4 | 1.11 6 | 0.97 9 | 1.119 | 0.97 9 | A | 46.39 | A |
| Example 3-60 | 40 | 5 | 44 | 11 | 298 | 3.4 | 1.18 9 | 0.96 8 | 1.184 | 0.97 1 | A | 52.91 | A |

[Table 21]

|  | HF-O-11-23 | CO2 | HFC-32 | HF-O-123-4yf | GWP | TG | Pc | Pc/Pe | CAP | COP | Formula (1) | Enrichment reduction degree | Evaluation |
|---|---|---|---|---|---|---|---|---|---|---|---|---|---|
| Example 3-61 | 70 | 10 | 5 | 15 | 34 | 7.1 | 1.27 6 | 0.95 5 | 1.193 | 0.93 5 | B | 157.35 | A |
| Example 3-62 | 80 | 10 | 5 | 5 | 34 | 4.1 | 1.37 2 | 0.93 3 | 1.264 | 0.92 3 | A | 384.45 | A |
| Example 3-63 | 65 | 10 | 11 | 14 | 75 | 6.5 | 1.29 3 | 0.95 5 | 1.216 | 0.93 7 | A | 158.41 | A |
| Example 3-64 | 70 | 10 | 11 | 9 | 75 | 5.1 | 1.33 9 | 0.94 5 | 1.251 | 0.93 1 | A | 216.07 | A |
| Example 3-65 | 55 | 10 | 21.5 | 13.5 | 146 | 5.8 | 1.29 7 | 0.95 8 | 1.239 | 0.94 4 | A | 134.04 | A |
| Example 3-66 | 60 | 10 | 21.5 | 8.5 | 146 | 4.7 | 1.34 1 | 0.94 9 | 1.274 | 0.93 9 | A | 167.68 | A |

(continued)

| | HFO-11-23 | CO2 | HFC-32 | HFO-1234yf | GWP | TG | Pc | Pc/Pe | CAP | COP | Formula (1) | Enrichment reduction degree | Evaluation |
|---|---|---|---|---|---|---|---|---|---|---|---|---|---|
| Example 3-67 | 63 | 10 | 21.5 | 5.5 | 146 | 3.9 | 1.367 | 0.944 | 1.295 | 0.937 | A | 203.25 | A |
| Example 3-68 | 45 | 10 | 29 | 16 | 197 | 6.0 | 1.270 | 0.966 | 1.230 | 0.952 | A | 106.69 | A |
| Example 3-69 | 50 | 10 | 29 | 11 | 197 | 5.1 | 1.310 | 0.958 | 1.264 | 0.947 | A | 122.13 | A |
| Example 3-70 | 55 | 10 | 29 | 6 | 196 | 4.0 | 1.351 | 0.950 | 1.298 | 0.943 | A | 147.93 | A |
| Example 3-71 | 35 | 10 | 36 | 19 | 244 | 6.2 | 1.235 | 0.973 | 1.214 | 0.960 | A | 89.12 | A |
| Example 3-72 | 40 | 10 | 36 | 14 | 244 | 5.5 | 1.274 | 0.966 | 1.246 | 0.956 | A | 97.29 | A |
| Example 3-73 | 45 | 10 | 36 | 9 | 244 | 4.6 | 1.313 | 0.959 | 1.279 | 0.952 | A | 109.07 | A |
| Example 3-74 | 30 | 10 | 44 | 16 | 298 | 5.6 | 1.241 | 0.975 | 1.232 | 0.964 | A | 70.01 | A |
| Example 3-75 | 40 | 10 | 44 | 6 | 298 | 4.2 | 1.315 | 0.963 | 1.296 | 0.956 | A | 97.35 | A |
| Example 3-76 | 55 | 15 | 21.5 | 8.5 | 146 | 6.0 | 1.441 | 0.947 | 1.359 | 0.928 | A | 209.16 | A |
| Example 3-77 | 30 | 15 | 44 | 11 | 298 | 6.4 | 1.368 | 0.967 | 1.344 | 0.950 | A | 109.66 | A |
| Example 3-78 | 30 | 20 | 44 | 6 | 298 | 6.8 | 1.496 | 0.961 | 1.454 | 0.935 | A | 130.85 | A |

It was found that cyclic performance was excellent, and the enrichment of HFO-1123 in a gas phase was able to be suppressed in Examples 3-1 to 3-78, as set forth in Tables 19 to 21.

In particular, in Example 3-3, Example 3-5, Examples 3-8 to 3-26, Examples 3-28 to 3-46, Examples 3-48 to 3-60, and Examples 3-62 to 3-77, A is from 30.0 to 80.0, B is from 2.7 to 15.0, C is from 5.0 to 45.0, and D satisfies Formula (1), and therefore, a temperature glide of 7.0°C or less is achieved, and cyclic performance is excellent, in a case in which the content of HFO-1123 with respect to the total content of HFO-1123, carbon dioxide, HFC-32, and HFO-1234yf is taken as A% by mass, the content of carbon dioxide with respect to the total content described above is taken as B% by mass, the content of HFC-32 with respect to the total content described above is taken as C% by mass, and the content of HFO-1234yf with respect to the total content described above is taken as D% by mass.

In Example 3-3, the content of HFO-1123 is 80.0% by mass or less, and therefore, COP is higher than that in Example 3-4.

In Example 3-5, the content of HFO-1234yf is 5.0% by mass or more, and therefore, condensing pressure is lower than that in Example 3-6.

In Example 3-77, the content of carbon dioxide is 15.0% by mass or less, and therefore, condensing pressure is lower than that in Example 3-78.

[Examples 4-1 to 4-48]

In Examples 4-1 to 4-48, for working media including HFO-1123, carbon dioxide, HFC-32, and HFO-1234ze (E) as compositions (% by mass) set forth in Tables 22 to 23, temperature glides in an evaporator (referred to as "TG" in the tables; unit was "°C"), condensing pressures (referred to as "Pc" in the tables), compression ratios (referred to as "Pc/Pe" in the tables), CAP, and COP were determined by carrying out refrigeration cycle theoretical calculation under the conditions described above. In Tables 22 to 23, "A" is set forth in the case of satisfying Formula (2), and "B" is set forth in the case of not satisfying Formula (2).

Enrichment reduction degrees were calculated by a method similar to that in Example 1-1. An enrichment reduction degree of less than 25% was evaluated as C, an enrichment reduction degree of from 25% to less than 45% was evaluated as B, and an enrichment reduction degree of 45% or more was evaluated as A.

GWP was calculated.

The measurement results and the evaluation results are set forth in Tables 22 to 23.

[Table 22]

| | HFO-11-23 | $CO_2$ | HFC-32 | HFO-1234z-e(E) | GWP | T G | Pc | Pc/P e | CAP | COP | Formula (2) | Enrichment reduction degree | Evaluation |
|---|---|---|---|---|---|---|---|---|---|---|---|---|---|
| Example 4-1 | 75 | 3 | 3 | 19 | 21 | 8. 5 | 1.04 7 | 0.98 8 | 1.00 2 | 0.95 9 | B | 41.79 | B |
| Example 4-2 | 75 | 3 | 5 | 17 | 34 | 7. 8 | 1.07 4 | 0.98 2 | 1.02 5 | 0.95 5 | B | 44.63 | B |
| Example 4-3 | 80 | 3 | 5 | 12 | 34 | 6. 0 | 1.13 2 | 0.96 8 | 1.06 9 | 0.94 6 | A | 57.72 | A |
| Example 4-4 | 85 | 3 | 5 | 7 | 34 | 4. 0 | 1.19 4 | 0.95 2 | 1.11 4 | 0.93 8 | A | 89.44 | A |
| Example 4-5 | 70 | 3 | 11 | 16 | 75 | 7. 2 | 1.09 4 | 0.98 0 | 1.05 1 | 0.95 7 | B | 45.09 | A |
| Example 4-6 | 75 | 3 | 11 | 11 | 75 | 5. 4 | 1.15 3 | 0.96 6 | 1.09 5 | 0.94 9 | A | 58.26 | A |
| Example 4-7 | 60 | 3 | 21.5 | 15.5 | 146 | 6. 6 | 1.10 5 | 0.98 1 | 1.07 7 | 0.96 3 | A | 40.02 | B |
| Example 4-8 | 65 | 3 | 21.5 | 10.5 | 146 | 4. 9 | 1.16 1 | 0.96 8 | 1.12 1 | 0.95 6 | A | 49.07 | A |
| Example 4-9 | 70 | 3 | 21.5 | 5.5 | 146 | 3. 0 | 1.22 0 | 0.95 3 | 1.16 7 | 0.95 0 | A | 68.57 | A |

(continued)

| | HF-O-11-23 | $CO_2$ | HFC-32 | HF-O-1234z-e(E) | GWP | T G | Pc | Pc/P e | CAP | COP | Formula (2) | Enrichment reduction degree | Evaluation |
|---|---|---|---|---|---|---|---|---|---|---|---|---|---|
| Example 4-10 | 72 | 3 | 21.5 | 3.5 | 146 | 2.2 | 1.24 3 | 0.94 8 | 1.18 7 | 0.94 8 | A | 83.55 | A |
| Example 4-11 | 55 | 3 | 29 | 13 | 196 | 5.4 | 1.12 8 | 0.97 7 | 1.10 8 | 0.96 6 | A | 38.33 | B |
| Example 4-12 | 60 | 3 | 29 | 8 | 196 | 3.8 | 1.18 4 | 0.96 5 | 1.15 2 | 0.96 0 | A | 46.45 | A |
| Example 4-13 | 50 | 3 | 36 | 11 | 244 | 4.6 | 1.14 0 | 0.97 5 | 1.12 9 | 0.97 0 | A | 35.87 | B |
| Example 4-14 | 55 | 3 | 36 | 6 | 244 | 3.1 | 1.19 5 | 0.96 3 | 1.17 4 | 0.96 4 | A | 42.31 | B |
| Example 4-15 | 40 | 3 | 44 | 13 | 298 | 4.9 | 1.10 5 | 0.98 4 | 1.11 2 | 0.97 9 | A | 30.20 | B |
| Example 4-16 | 45 | 3 | 44 | 8 | 298 | 3.6 | 1.15 6 | 0.97 3 | 1.15 6 | 0.97 4 | A | 33.59 | B |
| Example 4-17 | 70 | 4 | 11 | 15 | 75 | 7.2 | 1.12 4 | 0.97 8 | 1.07 6 | 0.95 3 | B | 60.95 | A |
| Example 4-18 | 80 | 4 | 11 | 5 | 75 | 3.2 | 1.24 4 | 0.94 7 | 1.16 7 | 0.93 9 | A | 138.53 | A |
| Example 4-19 | 60 | 4 | 21.5 | 14.5 | 146 | 6.6 | 1.13 4 | 0.97 9 | 1.10 1 | 0.96 0 | A | 53.81 | A |
| Example 4-20 | 65 | 4 | 21.5 | 9.5 | 146 | 4.8 | 1.19 0 | 0.96 6 | 1.14 6 | 0.95 3 | A | 67.51 | A |
| Example 4-21 | 55 | 4 | 29 | 12 | 196 | 5.4 | 1.15 7 | 0.97 5 | 1.13 2 | 0.96 3 | A | 51.36 | A |
| Example 4-22 | 60 | 4 | 29 | 7 | 196 | 3.7 | 1.21 2 | 0.96 2 | 1.17 7 | 0.95 7 | A | 63.34 | A |
| Example 4-23 | 45 | 4 | 36 | 15 | 244 | 6.0 | 1.11 6 | 0.98 5 | 1.11 0 | 0.97 2 | A | 42.22 | B |
| Example 4-24 | 50 | 4 | 36 | 10 | 244 | 4.6 | 1.16 8 | 0.97 3 | 1.15 3 | 0.96 7 | A | 47.86 | A |

(continued)

| | HF-O-11-23 | CO$_2$ | HFC-32 | HF-O-1234z-e(E) | GWP | T G | Pc | Pc/P e | CAP | COP | Formula (2) | Enrichment reduction degree | Evaluation |
|---|---|---|---|---|---|---|---|---|---|---|---|---|---|
| Example 4-25 | 32 | 4 | 44 | 20 | 298 | 6. 8 | 1.05 3 | 0.99 8 | 1.06 8 | 0.98 6 | A | 35.57 | B |
| Example 4-26 | 35 | 4 | 44 | 17 | 298 | 6. 1 | 1.08 2 | 0.99 2 | 1.09 4 | 0.98 2 | A | 37.06 | B |
| Example 4-27 | 40 | 4 | 44 | 12 | 298 | 4. 9 | 1.13 2 | 0.98 1 | 1.13 6 | 0.97 6 | A | 40.16 | B |
| Example 4-28 | 45 | 4 | 44 | 7 | 298 | 3. 6 | 1.18 3 | 0.97 1 | 1.18 0 | 0.97 1 | A | 44.71 | B |

[Table 23]

| | HF-O-11-23 | CO$_2$ | HFC-32 | HF-O-1234z-e(E) | GWP | T G | Pc | Pc/P e | CAP | COP | Formula (2) | Enrichment reduction degree | Evaluation |
|---|---|---|---|---|---|---|---|---|---|---|---|---|---|
| Example 4-29 | 70 | 5 | 11 | 14 | 75 | 7. 2 | 1.15 4 | 0.97 4 | 1.10 1 | 0.94 9 | B | 78.03 | A |
| Example 4-30 | 75 | 5 | 11 | 9 | 75 | 5. 2 | 1.21 3 | 0.96 0 | 1.14 6 | 0.94 2 | A | 107.64 | A |
| Example 4-31 | 60 | 5 | 21.5 | 13.5 | 146 | 6. 6 | 1.16 3 | 0.97 5 | 1.12 6 | 0.95 6 | A | 68.17 | A |
| Example 4-32 | 65 | 5 | 21.5 | 8.5 | 146 | 4. 7 | 1.22 0 | 0.96 2 | 1.17 1 | 0.95 0 | A | 87.09 | A |
| Example 4-33 | 55 | 5 | 29 | 11 | 196 | 5. 4 | 1.18 5 | 0.97 2 | 1.15 6 | 0.95 9 | A | 64.71 | A |
| Example 4-34 | 60 | 5 | 29 | 6 | 196 | 3. 7 | 1.24 1 | 0.95 9 | 1.20 2 | 0.95 4 | A | 81.08 | A |
| Example 4-35 | 45 | 5 | 36 | 14 | 244 | 6. 1 | 1.14 3 | 0.98 2 | 1.13 4 | 0.96 9 | A | 52.31 | A |
| Example 4-36 | 50 | 5 | 36 | 9 | 244 | 4. 6 | 1.19 6 | 0.97 1 | 1.17 8 | 0.96 3 | A | 59.68 | A |
| Example 4-37 | 35 | 5 | 44 | 16 | 298 | 6. 3 | 1.10 9 | 0.99 0 | 1.11 7 | 0.97 9 | A | 45.35 | A |

(continued)

| | HF-O-11-23 | $CO_2$ | HFC-32 | HF-O-1234z-e(E) | GWP | T G | Pc | Pc/P e | CAP | COP | Formula (2) | Enrichment reduction degree | Evaluation |
|---|---|---|---|---|---|---|---|---|---|---|---|---|---|
| Example 4-38 | 40 | 5 | 44 | 11 | 298 | 5. 0 | 1.15 9 | 0.98 0 | 1.16 0 | 0.97 3 | A | 49.43 | A |
| Example 4-39 | 75 | 10 | 5 | 10 | 34 | 7. 4 | 1.29 4 | 0.95 9 | 1.20 6 | 0.92 9 | B | 185.58 | A |
| Example 4-40 | 80 | 10 | 5 | 5 | 34 | 5. 0 | 1.35 6 | 0.94 1 | 1.25 3 | 0.92 3 | A | 336.47 | A |
| Example 4-41 | 60 | 10 | 21.5 | 8.5 | 146 | 6. 2 | 1.31 4 | 0.96 1 | 1.25 3 | 0.93 9 | A | 148.95 | A |
| Example 4-42 | 55 | 10 | 29 | 6 | 196 | 5. 1 | 1.33 2 | 0.95 8 | 1.28 2 | 0.94 3 | A | 136.96 | A |
| Example 4-43 | 45 | 10 | 36 | 9 | 244 | 6. 1 | 1.28 5 | 0.97 1 | 1.25 7 | 0.95 3 | A | 101.08 | A |
| Example 4-44 | 35 | 10 | 44 | 11 | 298 | 6. 6 | 1.24 4 | 0.98 0 | 1.23 8 | 0.96 3 | A | 83.10 | A |
| Example 4-45 | 40 | 10 | 44 | 6 | 298 | 5. 2 | 1.29 7 | 0.96 9 | 1.28 1 | 0.95 7 | A | 93.07 | A |
| Example 4-46 | 57 | 15 | 21.5 | 6.5 | 146 | 6. 7 | 1.43 5 | 0.95 3 | 1.35 5 | 0.92 7 | A | 212.39 | A |
| Example 4-47 | 35 | 15 | 44 | 6 | 298 | 6. 6 | 1.38 5 | 0.96 8 | 1.36 0 | 0.94 7 | A | 115.29 | A |
| Example 4-48 | 35 | 16 | 44 | 5 | 298 | 6. 5 | 1.41 4 | 0.96 6 | 1.38 4 | 0.94 4 | A | 121.32 | A |

It was found that cyclic performance was excellent, and the enrichment of HFO-1123 in a gas phase was able to be suppressed in Examples 4-1 to 4-48, as set forth in Tables 22 to 23.

In particular, in Example 4-3, Examples 4-6 to 4-9, Examples 4-11 to 4-16, Examples 4-18 to 4-28, Examples 4-30 to 38, and Examples 4-40 to 4-47, E is from 30.0 to 80.0, F is from 3.0 to 15.0, G is from 5.0 to 45.0, and H satisfies Formula (2), and therefore, a temperature glide of 7.0°C or less is achieved, and cyclic performance is excellent, in a case in which the content of HFO-1123 with respect to the total content of HFO-1123, carbon dioxide, HFC-32, and HFO-1234ze (E) is taken as E% by mass, the content of carbon dioxide with respect to the total content described above is taken as F% by mass, the content of HFC-32 with respect to the total content described above is taken as G% by mass, and the content of HFO-1234ze (E) with respect to the total content described above is taken as H% by mass.

In Example 4-3, the content of HFO-1123 is 80.0% by mass or less, and therefore, COP is higher than that in Example 4-4.

In Example 4-9, the content of HFO-1234ze (E) is 5.0% by mass or more, and therefore, condensing pressure is lower than that in Example 4-10.

In Example 4-47, the content of carbon dioxide is 15.0% by mass or less, and therefore, condensing pressure is lower than that in Example 4-48.

The entire content of the disclosure by Japanese Patent Application No. 2022-171785 filed on October 26, 2022 is incorporated herein by reference. All documents, patent applications, and technical standards described in this specification are herein incorporated by reference to the same extent as if each individual document, patent application, or technical standard was specifically and individually indicated to be incorporated by reference.

**Claims**

1. A working medium for a heat cycle, wherein

   the working medium comprises
   trifluoroethylene,
   a low boiling point compound having a lower boiling point than a boiling point of the trifluoroethylene, and
   high boiling point compounds having higher boiling points than the boiling point of the trifluoroethylene,
   the low boiling point compound is at least one selected from a group consisting of carbon dioxide, hexafluoroethane, and fluoromethane, and
   the high boiling point compounds are at least two selected from a group consisting of difluoromethane, 2,3,3,3-tetrafluoropropene, (E)-1,3,3,3-tetrafluoropropene, 3,3,3-trifluoropropene, tetrafluoromethane, 1,1,2,2-tetrafluoroethane, 1,1,1-trifluoroethane, 1,1,1,2,3,3,3-heptafluoropropane, cyclopropane, isobutene, isobutane, dimethyl ether, and ammonia.

2. The working medium for a heat cycle according to claim 1, wherein

   a content of the trifluoroethylene is from 30.0% by mass to 80.0% by mass with respect to a total content of the trifluoroethylene, the low boiling point compound, and the high boiling point compounds,
   a content of the low boiling point compound is from 2.7% by mass to 60.0% by mass with respect to the total content,
   a content of the high boiling point compounds is from 10.0% by mass to 67.3% by mass with respect to the total content, and
   the total content of the trifluoroethylene, the low boiling point compound, and the high boiling point compounds is 90.0% by mass or more with respect to a total amount of the working medium for a heat cycle.

3. The working medium for a heat cycle according to claim 1, wherein

   the low boiling point compound comprises carbon dioxide;
   the high boiling point compounds comprise difluoromethane and 2,3,3,3-tetrafluoropropene; and
   in a case in which a content of the trifluoroethylene with respect to a total content of the trifluoroethylene, the carbon dioxide, the difluoromethane, and the 2,3,3,3-tetrafluoropropene is taken as A% by mass, a content of the carbon dioxide with respect to the total content is taken as B% by mass, a content of the difluoromethane with respect to the total content is taken as C% by mass, and a content of the 2,3,3,3-tetrafluoropropene with respect to the total content is taken as D% by mass,
   the A is from 30.0 to 80.0,
   the B is from 2.7 to 60.0,
   the C is from 5.0 to 45.0, and
   the D is from 5.0 to 62.3.

4. The working medium for a heat cycle according to claim 3, wherein

   the A is from 30.0 to 80.0,
   the B is from 2.7 to 15.0,
   the C is from 5.0 to 45.0, and
   the D satisfies the following Formula (1):

   $5.0 \leq D \leq (0.000003B^2 - 0.00053B + 0.00616) \times A^2 + (-0.00013B^2 + 0.07589B - 1.09581) \times A + (0.05608 \times B^2 - 5.19457B + 79.27652)$.

**5.** The working medium for a heat cycle according to claim 1, wherein

the low boiling point compound comprises carbon dioxide;
the high boiling point compounds comprise difluoromethane and (E)-1,3,3,3-tetrafluoropropene; and
in a case in which a content of the trifluoroethylene with respect to a total content of the trifluoroethylene, the carbon dioxide, the difluoromethane, and the (E)-1,3,3,3-tetrafluoropropene is taken as E% by mass, a content of the carbon dioxide with respect to the total content is taken as F% by mass, a content of the difluoromethane with respect to the total content is taken as G% by mass, and a content of the (E)-1,3,3,3-tetrafluoropropene with respect to the total content is taken as H% by mass,
the E is from 30.0 to 80.0,
the F is from 3.0 to 60.0,
the G is from 5.0 to 45.0, and
the H is from 5.0 to 62.0.

**6.** The working medium for a heat cycle according to claim 5, wherein

the E is from 30.0 to 80.0,
the F is from 3.0 to 15.0,
the G is from 5.0 to 45.0, and
the H satisfies the following Formula (2):

$$5.0 \leq H \leq (0.000005F^2 - 0.00037F + 0.00301) \times E^2 + (-0.00087F^2 + 0.05802F - 0.54609) E + (0.05969F^2 - 3.39263F + 41.55565).$$

**7.** A composition for a heat cycle system, wherein the composition comprises: the working medium for a heat cycle according to any one of claims 1 to 6; and a refrigerating machine oil.

**8.** The composition for a heat cycle system according to claim 7, wherein the refrigerating machine oil is at least one selected from a group consisting of polyalkylene glycol oils, polyol ester oils, polyvinyl ether oils, fluorine-containing oils, mineral oils, and hydrocarbon-based synthetic oils.

**9.** A method of storing a working medium for a heat cycle, wherein

the method comprises a step of storing a working medium for a heat cycle, the working medium comprising trifluoroethylene, a low boiling point compound having a lower boiling point than a boiling point of the trifluoroethylene, and high boiling point compounds having higher boiling points than the boiling point of the trifluoroethylene,
the low boiling point compound is at least one selected from a group consisting of carbon dioxide, hexafluoroethane, and fluoromethane, and
the high boiling point compounds are at least two selected from a group consisting of difluoromethane, 2,3,3,3-tetrafluoropropene, (E)-1,3,3,3-tetrafluoropropene, 3,3,3-trifluoropropene, tetrafluoromethane, 1,1,2,2-tetrafluoroethane, 1,1,1-trifluoroethane, 1,1,1,2,3,3,3-heptafluoropropane, cyclopropane, isobutene, isobutane, dimethyl ether, and ammonia.

**10.** A method of producing a working medium for a heat cycle, wherein

the method comprises a step of mixing trifluoroethylene, a low boiling point compound having a lower boiling point than a boiling point of the trifluoroethylene, and high boiling point compounds having higher boiling points than the boiling point of the trifluoroethylene,
the low boiling point compound is at least one selected from a group consisting of carbon dioxide, hexafluoroethane, and fluoromethane, and
the high boiling point compounds are at least two selected from a group consisting of difluoromethane, 2,3,3,3-tetrafluoropropene, (E)-1,3,3,3-tetrafluoropropene, 3,3,3-trifluoropropene, tetrafluoromethane, 1,1,2,2-tetrafluoroethane, 1,1,1-trifluoroethane, 1,1,1,2,3,3,3-heptafluoropropane, cyclopropane, isobutene, isobutane, dimethyl ether, and ammonia.

**11.** A storage container for a working medium for a heat cycle, wherein

the storage container is an airtight storage container in which a working medium for a heat cycle, comprising trifluoroethylene, a low boiling point compound having a lower boiling point than a boiling point of the trifluoroethylene, and high boiling point compounds having higher boiling points than the boiling point of the trifluoroethylene, is stored in a state in which a gas phase and a liquid phase coexist,
the low boiling point compound is at least one selected from a group consisting of carbon dioxide, hexafluoroethane, and fluoromethane, and
the high boiling point compounds are at least two selected from a group consisting of difluoromethane, 2,3,3,3-tetrafluoropropene, (E)-1,3,3,3-tetrafluoropropene, 3,3,3-trifluoropropene, tetrafluoromethane, 1,1,2,2-tetrafluoroethane, 1,1,1-trifluoroethane, 1,1,1,2,3,3,3-heptafluoropropane, cyclopropane, isobutene, isobutane, dimethyl ether, and ammonia.

# FIG.1

# FIG.2

## INTERNATIONAL SEARCH REPORT

| International application No. |
|---|
| **PCT/JP2023/036437** |

**A.    CLASSIFICATION OF SUBJECT MATTER**

*C09K 5/04*(2006.01)i; *C10M 101/02*(2006.01)i; *C10M 105/04*(2006.01)i; *C10M 105/38*(2006.01)i; *C10M 107/24*(2006.01)i; *C10M 107/34*(2006.01)i; *C10M 107/38*(2006.01)i; *F25B 1/00*(2006.01)i; *C10N 40/30*(2006.01)n

FI:    C09K5/04 F ZAB; C10M101/02; C10M105/38; C10M107/34; C10M107/24; C10M107/38; C10M105/04; F25B1/00 396Z; C10N40:30

According to International Patent Classification (IPC) or to both national classification and IPC

**B.    FIELDS SEARCHED**

Minimum documentation searched (classification system followed by classification symbols)

C09K5/04; C10M101/02; C10M105/04; C10M105/38; C10M107/24; C10M107/34; C10M107/38; F25B1/00; C10N40/30

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

CAplus/REGISTRY (STN)

**C.    DOCUMENTS CONSIDERED TO BE RELEVANT**

| Category* | Citation of document, with indication, where appropriate, of the relevant passages | Relevant to claim No. |
|---|---|---|
| X | JP 2021-525823 A (ARKEMA FRANCE) 27 September 2021 (2021-09-27)<br>  claims, paragraphs [0039], [0103]-[0124], table 5, examples, etc. | 1-11 |
| X | WO 2018/047816 A1 (ASAHI GLASS COMPANY, LIMITED) 15 March 2018 (2018-03-15)<br>  claims, paragraphs [0121]-[0142], [0175]-[0182], examples, etc. | 1-11 |
| X | WO 2019/240205 A1 (DAIKIN IND LTD) 19 December 2019 (2019-12-19)<br>  claims, paragraphs [0081], [0097]-[0101], examples 6-8, 18, etc. | 1-11 |
| X | WO 2019/208384 A1 (DAIKIN IND LTD) 31 October 2019 (2019-10-31)<br>  claims, paragraphs [0101], [0118]-[0135], examples 5, 13-14, etc. | 1-11 |
| A | JP 2015-214632 A (PANASONIC IP MAN CORP) 03 December 2015 (2015-12-03)<br>  claims, paragraph [0039], examples, etc. | 1-11 |
| A | WO 2016/194847 A1 (ASAHI GLASS COMPANY, LIMITED) 08 December 2016 (2016-12-08)<br>  paragraphs [0157]-[0159], example 2, etc. | 1-11 |

☐ Further documents are listed in the continuation of Box C.    ☑ See patent family annex.

| \* | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **30 November 2023** | **12 December 2023** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (January 2015)

## INTERNATIONAL SEARCH REPORT
### Information on patent family members

International application No.

**PCT/JP2023/036437**

| Patent document cited in search report | | | Publication date (day/month/year) | Patent family member(s) | | | Publication date (day/month/year) |
|---|---|---|---|---|---|---|---|
| JP | 2021-525823 | A | 27 September 2021 | US 2021/0155839 A1 claims, paragraphs [0069], [0169]-[0225], table 5, examples, etc. WO 2019/234353 A1 EP 3802724 A1 CN 112400006 A | | | |
| WO | 2018/047816 | A1 | 15 March 2018 | US 2019/0257553 A1 claims, paragraphs [0134]-[0155], [0187]-[0189], examples, etc. EP 3511392 A1 CN 109689831 A | | | |
| WO | 2019/240205 | A1 | 19 December 2019 | US 2021/0246348 A1 claims, paragraphs [0099], [0115]-[0119], examples 6-8, 18, etc. EP 3808828 A1 CN 112262196 A | | | |
| WO | 2019/208384 | A1 | 31 October 2019 | US 2021/0079280 A1 claims, paragraphs [0114], [0131]-[0141], examples 5, 13-14, etc. EP 3786252 A1 CN 112004910 A | | | |
| JP | 2015-214632 | A | 03 December 2015 | (Family: none) | | | |
| WO | 2016/194847 | A1 | 08 December 2016 | US 2018/0079941 A1 paragraph [0194], example 2, etc. EP 3305869 A1 CN 107614652 A | | | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2016194837 A
- US 4249412 A
- JP 10502737 A
- JP 2007511645 A
- JP 2008500437 A
- JP 2008531836 A

**Non-patent literature cited in the description**

- **AKASAKA, R.** ; **LEMMON, E.W.** International Journal of Refrigeration.. 2020, vol. 119, 457-467
- *International Journal of Refrigeration.*, 2020, vol. 119, 457-467
- **AKASAKA, R.** ; **LEMMON, E.W.** A New Fundamental Equation of State for R1123 and its Applications to Mixture Models for Mixtures with R32 and R1234yf. *The 6th IIR Conference on Thermophysical Properties and Transfer Processes of Refrigerants*, 2021